# EUROPÄISCHE PATENTSCHRIFT

(11) **EP 2 049 220 B1**
(45) Veröffentlichungstag und Bekanntmachung des Hinweises auf die Patenterteilung: **20.04.2016**
(21) Anmeldenummer: 07818021.3
(22) Anmeldetag: 10.08.2007
(51) Int. Cl.: A47J 31/60, C02F 1/00, C02F 1/28

(54) **TANK**
TANK
RÉSERVOIR

(30) Priorität: 10.08.2006 DE 102006037636
(43) Veröffentlichungstag der Anmeldung: 22.04.2009
(73) Patentinhaber: Aquis Wasser-Luft-Systeme GmbH Lindau, Zweigniederlassung Rebstein, 9445 Rebstein (CH)
(72) Erfinder: WALLERSTORFER, Kurt, A-5204 Strasswalchen (AT); WAWRLA, Andreas, CH-9443 Widnau (CH); SCHOLZ, Roland, 9436 Balgach (CH); HEITELE, Bernd, CH-9437 Marbach (DE)
(74) Vertreter: Otten, Roth, Dobler & Partner mbB Patentanwälte
(86) Internationale Anmeldenummer: PCT/EP2007/007113
(87) Internationale Veröffentlichungsnummer: WO 2008/017510

(56) Entgegenhaltungen:
- CA-A1- 2 230 436
- DE-A1-102004 026 188
- DE-A1-102004 049 877
- DE-U1- 20 380 258
- GB-A- 2 346 568
- US-A1- 2003 038 046
- US-A1- 2004 211 931

## Beschreibung

Die Erfindung betrifft eine Wasserfilterkanne, umfassend einen Wassertank mit einer gravimetrisch betriebenen Filterpatrone nach dem Oberbegriff des Anspruchs 1.

In verschiedenen Küchengeräten und Maschinen, beispielsweise in Wasserfilterkannen, Wasserkochern, Kaffee- oder Espressomaschinen wird ein Wassertank zur Bevorratung einer Flüssigkeit, im Falle von Küchengeräten, Kaffee- oder Espressomaschinen zur Bevorratung von Wasser, vorgesehen, wobei eine Filterpatrone in den Tank einsetzbar ist, um das Wasser vor der Verarbeitung in der Maschine oder vor der Konsumierung aufzubereiten. Bekannte Filterpatronen weisen im unteren Bereich einen Aüslass auf, durch den das Wasser der zugehörigen Maschine oder einem Speicher- oder Aufbewahrungsgefäß zugeführt wird. Hierbei wird das Wasser über ein vorzugsweise gravimetrisch betriebenes Filterbett geleistet und gelangt über einen Anschluss der Filterpatrone an einen entsprechenden Anschluss des Wassertankes in die Maschine oder ein anderweitige Sammel- und Aufbewahrungsgefäß.

Für einen zuverlässigen Betrieb der Küchengeräte und Maschine ist es von großer Bedeutung, dass eine in ihren Filterparametern definierte Filterpatrone verwendet wird. Durch eine mangelhafte Filterpatrone wird unzureichend oder falsch aufbereitetes Wasser produziert, was zu negativen Auswirkungen, beispielsweise ungenügende Geschmacks- und/oder Geruchsoptimierung, Kalkreduzierung oder dergleichen, bis hin zu Maschinendefekten führen kann. Die Maschinensteuerung ist z.B. nicht in der Lage, rechtzeitig die vorgesehenen Wartungsintervalle einzuleiten, wenn sie von einer Filterpatrone des korrekten Typs ausgeht, diese jedoch tatsächlich nicht verwendet wird. Bei der Verwendung ungenügender Filterpatronen kommt es zu Problemen nicht nur in der Betriebssicherheit der Maschine, sondern auch in Fragen der Gewährleistung usw. Es ist daher von großer Bedeutung, sicherzustellen, dass stets nur zugelassene Filterpatronen zum Einsatz kommen.

Aus dem Stand der Technik zeigt die DE 10 2004 026 188 A1 einen Tank für wasserführende Geräte mit einem Anschluss am Tank zur Zufuhr von Wasser aus dem Wassertank in ein Sammelgefäß, sowie einen Filteranschluss zum Anschluss einer gravimetrisch betriebenen Filterkartusche im Inneren des Tanks.

Die DE 10 2004 049 877 A1 offenbart eine zum Einsetzen in einen Nasserbehälter vorgesehene Saugfilterkartusche, an deren Auslaufstutzen ein an einem Filmscharnier angelenkter Schnapprand ausgebildet ist. Dieser wird beim Aufsetzen der Filterpatronen auf einem, den im Inneren des Wasserbehälters angeordneten Auslass umrandenden Sitzelement von einem daran als Ringschulter ausgebildeten Betätigungselement erfasst und von einer ersten nach unten gerichteten Schnappposition in eine zweiten nach oben gerichtete Schnapppostition umgeklappt, sodass er dichtend und klemmend an einem ebenfalls daran ausgebildeten Rohrstutzen fixiert wird. Hierdurch soll ein Aufschwimmen der Filterpatrone beim Befüllen des Wasserbehälters mit Wasser ohne zusätzliche Sicherungselemente auf einfache Weise und zuverlässig dichtend zur Verfügung gestellt werden. Die GB 2 346 568 A offenbart einen Wasserbehälter mit einer Bodenöffnung, in welche eine an der Unterseite des Wasserbehälters anzuordnende Filterkartusche mit einem als Verdrehsicherung ausgebildeten, rotationsunsymetrischen filterseitigen Tankanschlusselement eingesteckt wird. Die DE 203 80 258 U1 offenbart ebenfalls einen Wasserbehälter, an welchem vom dessen Unterseite her eine Wasserbehandlungskartwsche mittels an deren Gehäusewand flügelartig nach außen stehend ausgebildeten, in der Form eines Schlüsselkonzeptes ausgebildeten Fixierelementen angeordnet ist.

Dem vorliegenden Patentbegehren liegt die objektive Aufgabe zugrunde, Mittel zur zuverlässigen Wasseraufbereitung gemäß für einen bestimmten Anwendungsfall definierter Filterparameter vorzuschlagen.

Die Lösung dieser Aufgabe erfolgt, ausgehen vom Oberbegriff des Anspruchs 1 durch dessen kennzeichnende Merkmale. In den abhängigen Ansprüchen sind vorteilhafte und zweckmäßige Weiterbildungen angegeben.

Dementsprechend zeichnet sich ein erfindungsgemäßer Tank mit einem Filteranschluss zum Anschluss einer gravimetrisch betriebenen Filterpatrone im Inneren des Tanks dadurch aus, dass mechanische Kodierungsstrukturen am Filteranschlusselement vorgesehen sind, um den Einsatz einer nicht zum Tank korrespondierenden Filterkartusche auszuschließen. Unter einem Tank wird erfindungsgemäß neben einem zur Wasserspeicherung geeignetem Gefäß auch jede andere einen für den Betrieb der Filterpatronen ausreichenden hydrostatischen Druck erzeugende Vorrichtung verstanden, wie z. B. eine offene und/oder geschlossene Fließstrecke.

Unter einem solchen tankseitigem Filterausschlusselement sind erfindungsgemäß direkt und/oder indirekt am Tank angeordnete und/oder ausgebildete Elemente zu verstehen, wie vorstehende und/oder vertiefte Aufnahme- und/oder Fixier- und/oder Kodier- und/oder Dichtelemente. Diese können z.B. als fest mit dem Tank verbundene oder verbindbar ausgebildete Ausschlussstutzen, als Haken, Ösen, Adapter oder dergleichen ausgebildet sein.

Der tankseitige Filteranschluss ist hierbei vorzugsweise im Bodenbereich des Tanks ausgebildet. Er kann durchaus aber auch wenigstens teilweise oder auch vollständig in einer Ecke und/oder an einer Seitenwand des Tanks innen angeordnet sein, je nach dem an welcher Stelle der Anschluss zwischen dem Wassertank und einer geräteseitigen Abflußleitung vorgesehen ist. Zum Beispiel ist auch ein in einem vom Boden des Tanks in dessen betriebsmäßiger Einbaulage nach oben hin beabstandet aus dem Tank herausgeführtes tankseitiges Filteranschlusselement denkbar.

Durch solche Ausführungsformen kann z.B. ein kannenartiger Tank realisiert werden, in welchem wiederum nur eine mit einem entsprechenden kodierten filterseitigen Tankanschlusselement versehene Filterpatrone eingesetzt werden kann. Die geräteseitige Verbindung des Tankanschlusses kann sowohl bei diesem als auch bei den vorbeschriebenen Ausführungsformen als Steckanschluß an ein entsprechend komplementäres geräteseitige Tankanschlusselement abgeschlossen werden. Das vom Tankboden beabstandete tankseitige Filteranschlusselement kann beispielsweise auch als an einer Tankwand einhängbare Filteranschlusselement ausgebildet sein, z.B. in der Form einer Rohrleitung, die bei eingesetzter Patrone mit entsprechend passender Kodierung zur Ausweitung des in den Tank eingefüllten und durch die Filterpatrone gefilterten Rohwassers dient.

Bei entsprechend tiefliegender Anordnung der Wassereintrittsöffnungen für die Filterstrecke kann auch mit einer derartigen Ausführungsform der wesentliche Inhalt des Tanks entleert werden, so dass dieser keine oder nur eine geringe Menge an nicht durch die Filterstrecke führbares Todwasser aufweist.

Die Strukturen am Filteranschluss des Tanks müssen somit nach einem Schlüssel-Schlossprinzip mit entsprechenden Anschlussstrukturen einer Filterpatrone wechselwirken, damit die Filterpatrone funktionsfähig in den Wassertank einsetzbar ist. Ein Maschinen- bzw. Tankliersteller kann auf diese Weise dafür Sorge tragen, dass nur Filterpatronen zum Einsatz kommen, die einen zuverlässigen Betrieb der Maschine gewährleisten. Der gravimetrische Wasserdruck kann beispielsweise über einen entsprechend hoch über der Filterpatrone liegenden Wasserspiegel im Tank erzeugt werden. Je höher der Wasserspiegel und je niedriger der Fließwiderstand im Inneren der Filterpatrone, desto rascher kann gefiltertes Wasser bereitgestellt werden. Insbesondere vorteilhaft kann der Tank hierfür mit einem vertieft ausgebildeten Patronenaufnahmeabschnitt versehen sein, um den Tank möglichst gut entleeren zu können. Es ist durchaus aber auch ein gravimetrischer Filterbetrieb mit einem herkömmliche Tank ohne spezielle Vertiefung möglich, solange der Wasserspiegel das im Tank befindliche Rohwasser durch den Filter drückt.

In einer besonderen Ausführungsform der Erfindung ist der, Filteranschluss des Tanks mit wenigstens einer, wenigstens einen Vorsprung umfassenden Kodierungsstruktur versehen, die zu einer komplementären, dementsprechend wenigstens eine Ausnehmung und/oder wenigstens einen Vorsprung umfassenden Kodierungsstruktur der Filterpatrone passt. Derartige Vorsprünge und/oder Ausnehmungen können dabei in axialer Richtung des Filteranschlusselementes bzw. der Filterpatrone vorgesehen werden.

In einer besonders vorteilhafte Ausführungsform der Erfindung wird der Filteranschlüsse des Tanks und ein Ansc.hlussstut:zen der Filterpatrone so ausgebildet, dass diese einander umschließen. Auch in dieser Ausführungsform sind ohne Weiteres jedoch auch axiale Kodierungsstrukturen, beispielsweise an der Stirnseite des Anschlussstutzens oder im Bereich des Tankboden möglich.

Vorzugsweise werden die Kodierungsstrukturen wenigstens teilweise zugleich als Fixierungselemente zur Befestigung der Filterpatrone ausgebildet. In diesem Fall werden den Kodierungsstrukturen bevorzugt hinterschneidend ausgeführt, so dass beispielsweise durch Drehen oder durch Klipsen eine Fixierung der Filterpatrone am Tankboden bzw. einem am Tankboden angebrachten Befestigungselement stattfinden kann, wobei selbstverständlich die entsprechenden Kodierungsstrukturen zueinander passen müssen, um einen Betrieb mit korrekter Filterpatrone sicherzustellen.

Kodierungsstrukturen können grundsätzlich auch als Betätigungsorgane im Bereich des Tänkanschlusses herangezogen werden. So kann beispielsweise ein am Tank angebrachter Schaltmechanismus mit den Kodierungsstrukturen der Filterpatrone betätigt werden, der zur Signalisierung des korrekten Sitzes der Filterpatrone oder zur Erkennung des richtigen Typs von Patrone durch das zugehörige Gerät dienen kann.

In der Erfindung wird die Kodierungsstruktur durch die Formgebung des Umfangs des tankseitigen Filteranschlusses realisiert. So wird der Filteranschluss des Tanks mit einer Umfangskontur in Form eines Polygonzugs vorgesehen. Eine derartige Formgebung ermöglicht darüber hinaus eine weitergehende Winkelkodierung für verschiedene Einsatzwinkelpositionen der Filterpatrone.

Vorzugsweise wird zu diesem Zweck eine drehsymmetrische Umfangskontur am Filteranschlusselement vorgesehen. Mit Hilfe einer drehsymmetrischen Ausgestaltung sind verschiedene, vorbestimmte Winkelpositionen beim Einsetzen einer Filterpatrone realisierbar, denen bei Bedarf eine Zusatzfunktion je nach Winkelposition zugeordnet werden kann. Ein Beispiel für eine Umfangsform des tankseitigen Filteranschlusselementes nach den oben beschriebenen Ausführungsbeispielen wäre beispielsweise mit einer Sechskant-Querschnittskontur gegeben. Eine solche Kontur lässt z. B. sechs verschiedene Winkelpositionen einer dazu korrespondierenden Filterpatrone zu.

Das tankseitige Filteranschlusselement ist dabei als Vorsprung mit entsprechendem Außenumfang ausgebildet. Ein Anschlüssstutzen ist dementsprechend zum Aufstecken eines korrespondierenden Anschlusselementes der Filterpatrone am Außenumfang mit der entsprechenden Umfangskontur versehen.

Vorteilhafterweise wird die so geformte Umfangsfläche zugleich als Dichtfläche ausgebildet. Die Dichtung kann somit in vorteilhafter Weise aus dem gleichen Material wie das Patronengehäuse hergestellt werden, vorzugsweise angespitzt. Auf diese Weise ist sichergestellt, dass nur eine Filterpatrone mit dazu korrespondierender Form der Dichtung für die Filterausgangsleitung funktionsfähig in den Tank eingesetzt und am tankseitige Filteranschlusselement angeschlossen werden kann.

Eine Umfangsfläche, die wie oben beschrieben geformt ist, kann auch als Halterung für die Filterpatrone verwendet werden, die mit einem entsprechend geformten Halterungselement im Tankbereich korrespondiert. Auch in diesem Fall ist durch die Umfangsfläche eine Kodierungsstrüktur realisiert.

Eine weitere Kodiermöglichkeit des Tank-Filteranschlusses besteht durch die Veränderung der Ausrichtung der durch das filterseitige Tankanschlusselement verlaufenden Längsachse gegenüber einer durch das Filtergehäuse verlaufenden Längsachse, so dass diese zueinander beispielsweise einen bestimmten, insbesondere spitzen Winkel ausbilden. Hierzu kann das filterseitige Tankanschlusselement gegenüber dem Patronengehäuse vorzugsweise leicht geknickt ausgebildet sein. Patronen, die kein in ihrer Lage derart abgeknickt ausgerichtetes Anschlusselement aufweisen, können in einem entsprechend eng ausgebildeten Wassertank nicht funktionstüchtig eingesetzt werden. Ein weiterer Vorteil einer solchen Kodierung liegt darin, dass damit auch gewölbte und/oder gebogen ausgebildete Wassertanks mit vergleichsweise großer Längserstreckung betriebssicher und zuverlässig bestückbar sind, da durch die Abwinkelung der beiden Längsachsen zueinander eine entsprechend zuverlässig dichtende und fixierende Tank-Filter-Aufnahme durch eine optimale Ausrichtung des tankseitigen Filteranschlusselementes im Tank und eine von einer senkrechten Einführbewegung abweichende Einsetzbewegung für die Winkelpatrone realisierbar ist,

Gegebenfalls können hierzu an der Filterpatrone und/oder am Tank weitere Führungselemente zur zuverlässigen Verbindung des tankseitigen Filteranschlusselementes mit dem filterseitigen Tankanschlusselement vorgesehen sein. Insbesondere gut eignet sich hierfür z.B. tankseitig vorgesehene in der Einführrichtung einen sich verjüngenden Querschnitt ausbildende Rippen, durch welche das filterseitige Anschlusselement und/oder das Filtergehäuse und/oder eine vom Filtergehäuse vorstehende Führungsstruktur, wie z.B. ein Anschlussring oder dergleichen, beim Einsetzen der Filterpatrone führen. Eine solche filterseitige Führungsstrüktur kann als Umfangsfläche ausgebildet sein, sie kann auch schlitzförmig, komplementär zu den oben beschriebenen Rippen ausgebildete Konturen und/oder eine andere geeignete Struktur aufweisen.

Bei einer Rippeh-Schlitz-Kodierung ist wiederum eine weitere Kodiermöglichkeit durch in Draufsicht betrachtet unterschiedliche Winkelködierung für einzelne oder mehrere solche komplementärer Elemente möglich. Nur wenn die Schlitz-Rippenkombination und die abgewinkelte Tank-Filteranschlussstruktur zusammenpassen kann eine entsprechende Filterpatrone betriebsgemäß eingesetzt werden.

Diese hier beschriebene Führungs- und Kodierstruktur ist aber durchaus auch für nicht abgewinkelt ausgebildete Filteranschlusselemente mit der gleichen Wirkungsweise einsetzbar.

Eine zusätzliche Führungs- und/oder Kodierfunktion kann durch an der Filterpatrone stirnseitig ausgebildete, vorstehende Spitzen oder Ausnehmungen realisiert werden, welche in entsprechend komplementär ausgeformte, tankseitige Kodier- und/oder Führungsstrukturen eingreifen können.

Die Kodierungsstruktur kann, insbesondere dann, wenn sie zugleich die Dichtfläche bildet, eine in axialer Richtung sich erstreckende Querschnittsverjüngung, z.B. nach Art eines Pyramidenstumpfs aufweisen. Hierdurch wird ein leichteres, dichtes Aufstecken ohne größere Reibungskräfte ermöglicht.

Auf Seiten der Filterpatronen sind, wie bereits mehrfach angesprochen, die entsprechenden Kodierungsstrukturen vorzusehen, die mit den tankseitige Kodierungsstrukturen korrespondieren. Ist die Dichtfläche des tankseitigen Filteranschlusses in die Formgebung der Kodierungsstrukturen eingeschlossen, so wird in einer besonderen Ausführungsform die Dichtung selbst als filterseitiges Tankanschlusselement, mit der entsprechenden Formgebung versehen. So ist beispielsweise im Falle eines sechskantförmigen Querschnitts des tankseitigen Filteranschlusselementes die Möglichkeit gegeben, als Gegenstück eine entsprechend sechskantförmige Dichtung vorzusehen. Diese kann dabei als Radialdichtung ausgeführt werden, die auf einen entsprechend geformten, im obigen Ausführungsbeispiel sechskantförmig geformten Vorsprung aufgesteckt wird.

Im Falle einer Querschnittsverjüngung wie oben angeführt wird dabei vorzugsweise auch die Dichtung entsprechend angepasst, so dass sie sich beim Aufstecken auf einen z.B. als Sechskant-Pyramidenstumpf ausgebildeten Vorsprung flächig anschmiegt.

In dieser Ausgestaltung ist nur eine Filterpatrone mit entsprechend geformter Dichtung funktionsfähig einsetzbar.

In einer Weiterbildung der Erfindung werden zwei oder mehrere unterschiedliche Kodierungsstrukturen vorgesehen. So kann beispielsweise in Kombination mit einer Kodierung des Anschlusses wie vorbeschrieben zusätzlich ein Fixierungsmittel vorgesehen werden, mit dem die Filterpatrone positionierbar ist, wobei in diesem Fixierungsmittel weitere Kodierungsstrukturen untergebracht werden können. So kann beispielsweise eine Kodierung über die Sichtfläche wie vorbeschrieben kombiniert werden mit einer separat davon angeordneten Vorrichtung zur Fixierung und/oder zusätzlichen Kodierung. Eine solche Fixierung kann innerhalb der Filterpatrone oder aber auch außerhalb der Filterpatronen vorgenommen werden.

Vorteilhafterweise wird darüber hinaus eine Verschnitteinstellung vorgesehen, mit der ein Bypassstrom von ungefiltertem oder auf andere Weise gefilterte oder auf andere Weise aufbereitetem Wasser am Filterbett vorbeigeführt wird, wobei die Menge des ungefilterten oder auf andere Weise gefilterten oder aufbereiteten Wassers einstellbar ausgebildet wird. Dies ist beispielsweise mit einer oder mehreren Bypassöffnungen möglich, die zur Einstellung der am Filterbett vorbeigeleiteten Wassermenge variabel einstellbar geöffnet werden. Eine solche Verschnitteinstellung kann beispielsweise über die Winkelposition der Einbaulage der Filterpatrone verwirklicht werden. In diesem Fall ist die Kombination der Kodierungsstruktur mit der Vorgabe fester Winkelpositionen über die Einbaulage besonders von Vorteil.

Die Verschnittmenge an ungefiltertem oder auf andere Weise aufbereitetem Wasser kann dabei durch entsprechend ausgebildete Öffnungen, die das Tankinnere direkt mit dem Abfluss des Tanks verbinden, verwirklicht werden. Diese Öffnungen können je nach Einsetzwinkel der Filterpatrone unterschiedlich groß ausgebildet bzw. geöffnet sein und/oder in unterschiedlicher Anzahl geöffnet werden, so dass sich abhängig von der Einbaulage der Filterpatrone ein unterschiedliches Verschnittverhältnis ergibt.

So können beispielsweise bei einer sechskantförmigen Kodierüngsstruktur im Anschlussbereich der Filterpatrone im tankseitigen Anschlussstutzen, der zur Verbindung mit der Filterpatrone vorgesehen ist, unterschiedlich große Öffnungen als Bypass vorgesehen werden, die beim Aufstecken einer Filterpatrone winkelabhängig verschlossen werden. Die Bypassöffnungen werden dabei bevorzugt in der Dichtfläche angebracht, so dass durch eine entsprechend geformte Anschlussdichtung der Filterpatrone beim Einsetzen der Filterpatrone alle Öffnungen mit Ausnahme der als Bypassöffnung vorgesehenen Öffnung abgerichtet werden.

Die Verschnittmenge kann auch auf andere Weise unter Nutzung der Kodierungsstruktur eingestellt werden. So kann beispielsweise eine Kodierungsstruktur zugleich als mechanischer Mitnehmer dienen, um ein Verstellelement im Bankbereich durch die Filterpatrone mechanisch zu betätigen. Im Falle eines sechskantförmigen Anschlusssockels im Bankbereich könnte beispielsweise eine entsprechende Sechskantkontur der Filterpatrone dazu dienen, um ein verdrehbares Sockelelement zur Verschnittmengeneinstellung zu verdrehen. Die sechskantförmige Kodierungsstruktur der Filterpatrone hätte sodann nicht nur Kodierungsfunktion, sondern wäre zugleich ein mechanisches Betätigungselement, gewissermaßen nach Art eines Sechskantschlüssels.

Zur Realisierung einer Verschnittvorrichtung können aber auch entsprechende Öffnungen und/oder Kanäle in der Filterpatrone ausgebildet sein, die z.B. mit und/oder ohne Wechselwirkung mit einem tankseitigen Verschnittelement einen Verschnitt für das durch die Filterpatrone gefilterten Wassers ermöglichen. In entsprechender Weise gilt dies auch bei der Verwendung eines gegebenenfalls zwischen tank- und filterseitigem Anschlusselement zwischengefügtem Anschluss und/oder Verlängerungselement, wie z.B. einem Adapter mit gleicher und/oder anderer Anschluss- und/oder Kodier- und/oder Fixier- und/oder Dichtstruktur.

Verschiedene Ausführungsbeispiele sind in der Zeichnung dargestellt und werden an Hand der Figuren nachstehend näher erläutert.

Im Einzelnen zeigen
- Fig. 1: eine Seitenansicht des Filteranschlussbereichs in einer ersten Ausführungsform,
- Fig. 2: eine Schnittdarstellung des Anschlussbereichs gemäß Figur 1,
- Fig. 3: eine Seitenansicht einer zweiten Ausführungsvariante eines Filteranschlusses,
- Fig. 4: eine Schnittdarstellung der zweiten. Ausführungsform gemäß Fig. 3,
- Fig. 5: eine vergrößerte Seitenansicht gemäß Fig. 3,
- Fig. 6: eine Ausschnittvergrößerung aus den Seitenansichten gemäß Fig. 3 und Fig. 5,
- Fig. 7: eine Draufsicht auf ein tankseitiges Filteranschlusselement,
- Fig. 8: eine Schnittdarstellung auf ein Anschlusselement gemäß Fig. 7,
- Fig. 9: eine Draufsicht auf eine weitere Ausführungsform eines tankseitigen Filteranschlusselementes,
- Fig. 10: eine Schnittdarstellung durch ein Filteranschlusselement gemäß Fig. 9,
- Fig. 11: eine Draufsicht auf einen Bodenausschnitt eines Wassertank gemäß einer weiteren Ausführungsform,
- Fig. 12: eine Seitenansicht auf einen Bodenausschnitt eines Wassertankes gemäß Figur 11 mit eingesetzter Filterpatrone,
- Fig. 13: eine Draufsicht auf das Tankanschlusselement einer Filterpatrone gemäß Figur 12,
- Fig. 14: eine perspektivische Darstellung einer Filterpatrone gemäß Figur 12,
- Fig. 15: eine Draufsicht auf ein Bodenausschnitt eines Wassertankes gemäß einer weiteren Ausführungsform,
- Fig. 16: eine Schnittdarstellung in den Anschlussbereich der Filterpatrone einer Ausführungsform gemäß Fig. 11,
- Fig. 17: eine Ausführungsvariante mit winkelabhängiger Verschnittmengeneinstellung,
- Fig. 18: eine zweite Ausführungsvariante mit winkelabhängiger Verschnittmengeneinstellung,
- Fig. 19: beispielhaft und schematisch einen filterseitigen und einen geräteseitigen Tankanschluss, jeweils in Kombination mit einem entsprechend ausgebildeten Adapterstück,
- Fig. 20-31: eine weitere Ausführungsform eines Filteranschlusses für eine an einen Tank anzuschließende Filterpatrone mit einem tankseitigen Filteranschlusselement und einem filterseitigem Tankanschlusselement schematisch und beispielhaft in unterschiedlichen Ansichten und Ausschnitten dargestellt und die
- Fig. 32-93: weitere mögliche Ausführungsformen in unterschiedlichen Ansichten beispielhaft und schematisch dargestellt.

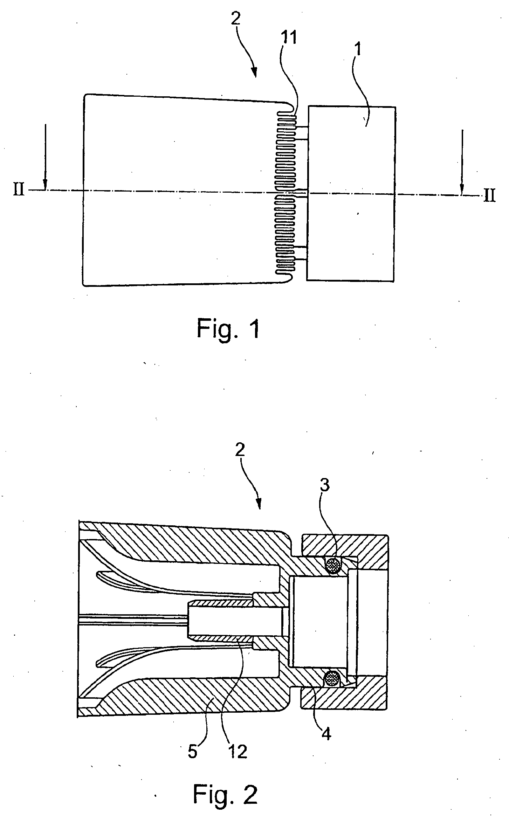

Figur 1 zeigt nicht erfindungsgemäße Anschlusselemente eines Wassertanks sowie der zugehörigen, vorzugsweise gravimetrisch betriebenen Filterpatrone. Im gravimetrischen Betrieb drückt das oberhalb der Filterstrecke im Tank befindliche Wasser das darunter befindliche durch die Filterpatrone. Zur Unterstützung dieses gravimetrischen Betriebes könnte ggf. auch eine Unterdruck erzeugende Vorrichtung, wie z.B. eine Pumpe vorgesehen werden, so dass auch ein kombinierter gravimetrischer Betrieb mit Saugunterstützung möglich ist. Tankaeitig ist ein Anschlusssockel 1 dargestellt, der fest mit dem Boden eines zugehörigen Tanks verbunden, beispielsweise verschweißt, verklebt oder auf sonstige Weise befestigt wird. In diesen Anschlusssockel 1 ist das Tankanschlusselement 2 einer Filterpatrone eingesetzt und mit einer Radialdichtung 3 abgerichtet. Das Tankanschlusselement zeigt einen Anschlussstutzen 4, der in ein nur teilsweise dargestelltes Patronengehäuse 5 übergeht. In der Ausführungsvariante gemäß den Figuren 1 und 2 gelangt das Wasser über zeitliche Schlitze 6 in das Patronengehäuse 5 und passiert anschließend ein nicht näher dargestelltes Filterbett. Die Filterstrecke kann dabei im Aufstrom, im Abstrom oder in Kombination mit beiden Strömungsführungen ausgebildet sein. Durch das Abflussrohr gelangt das gefilterte Wasser letztendlich in ein Sammel- oder Lagergefäß oder in den Geräteanschluss.

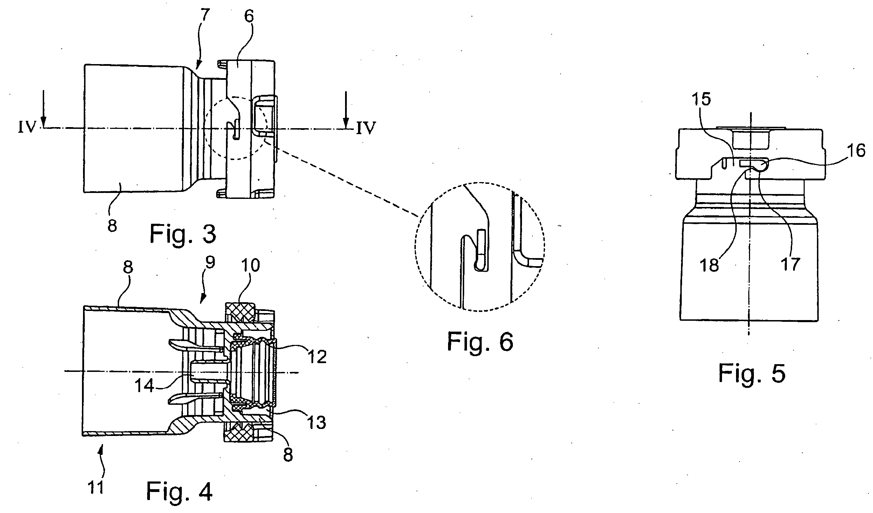

Figur 3 zeigt eine andere nicht erfindungsgemäße Ausführungsvariante mit Anschlusssockel 8 und Tankanschlusselement 9, auch hier ist ein Anschlussstutzen 10 vorgesehen, der in den Anschlusssockel 8 eingefügt ist. Der Anschlussstutzen 10 geht über in ein Patronengehäuse 11, das wiederum nur teilweise dargestellt ist. In dieser Ausführungsvariante ist eine Axialdichtung 12 vorgesehen, die die Filterpatrone gegenüber einem nicht näher dargestellten Tankboden abdichtet.

In der nicht erfindungsgemäßen Ausführungsvariante gemäß den Figuren 3 und 4 gelangt das Wasser über den Zwischenbereich 13 zwischen dem Anschlussstutzen 10 und der Axialdichtung 12 in das Filtergehäuse. Hierzu sind nicht näher dargestellte Siebschlitze vorgesehen, die den Eintritt in das Filterpatronengehäuse 10 ermöglichen. Über das innere Abflussrohr 14 gelangt auch hier gefiltertes Wasser nach einer Filterstrecke mit beliebiger Strömungsführung, z.B. im Aufstrom, im Abstrom oder in Kombinationen von Auf- und Abstrom, wieder in den Abflussbereich des zugehörigen Tanks.

Die Ausführungsform gemäß den Figuren 3 und 4 ist mit einem nicht erfindungsgemäßen Bajonettverschluss versehen, der in den Figuren 5 und 6 näher dargestellt ist. Hierzu ist der Anschlusssockel 8 mit Aufnahme und Führungsbahnen 15 versehen, in die radial vom Anschlussstutzen 10 abstehende Vorsprünge 16 eingeführt werden. Durch entsprechende Rastelemente 17, 18 in den Vorsprüngen der Filterpatrone einerseits sowie in den Aufnahme- und Führungsbahnen 15 andererseits ergibt sich eine Verrastung der Filterpatrone im Anschlussstutzen 10 durch eine Drehbewegung. Hierdurch wird eine definierte Endposition der Filterpatrone erreicht. Weitergehende Halterungen sind nicht mehr erforderlich, da durch diese Art des Bajonettverschlusses die Filterpatrone mit der Axialdichtung 12 zuverlässig am Boden gehalten wird.

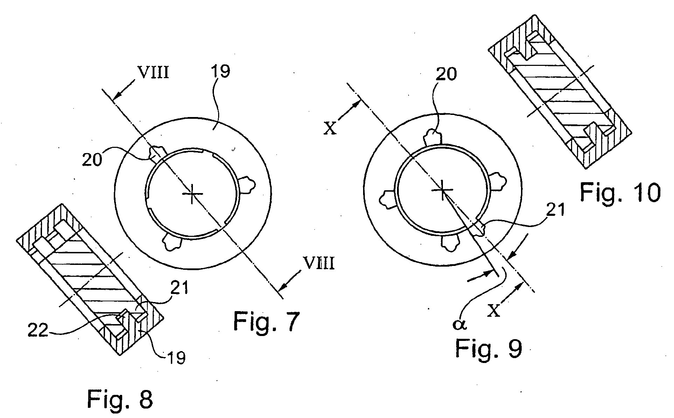

In der nicht erfindungsgemäßen Ausführung gemäß den Figuren 3 bis 6 stellen bereits die Vorsprünge 16 sowie die zugehörigen Aufnahme- und Führungsbahnen 15 eine Art Kodierungsstruktur dar. Sowohl in dieser Ausführung als auch in der Ausführung gemäß den Figuren 1 und 2 können zusätzliche erfindungsgemäße Kodierungsstrukturen vorgesehen werden. Figur 7 zeigt in der Draufsicht eine nicht erfindungsgemäße mögliche Ausgestaltung eines Anschlusssockels 19 mit drei Öffnungen 20, die nach Art eines Schlüssellochs geformt sind. Diese Öffnungen 20 bilden durch ihre Anordnung und Formgebung eine nicht erfindungsgemäße radiale Kodierungsstruktur. In diese Öffnungen 20 können, wie in Figur 8 erkenntlich ist, Kodiervorsprünge nach Art von Schlüsselbärten eingeführt werden. Im zugehörigen Anschlusssockel 19 kann darüber hinaus eine passende Kodierfeder 22 ausgebildet sein, die in die zwischen den Kodiervorsprüngen 21 gebildete Nut passt. Beim Einsetzen und Verdrehen einer Filterpatrone in den Anschlusssockel 19 wirken demnach die Öffnungen 20, die Kodiervorsprünge 21 sowie die Kodierfeder 22 miteinander und ergeben somit Kodierstrukturen, die nur ein Einsetzen einer Filterpatrone mit entsprechenden Strukturen erlaubt.

Die Ausführungsform gemäß den Figuren 9 und 10 entspricht der vorbeschriebenen, nicht erfindungsgemäßen Ausführungsvariante, wobei nunmehr anstelle eines dreifachen ein vierfaches Schlüssel-Schlossprinzip dargestellt. Anstelle von drei Öffnungen 20 sind nunmehr vier Öffnungen vorgesehen. Darüber hinaus ist der Drehwinkel α dargestellt, mit dem die Kodiervorsprünge 21 gegenüber den Öffnungen 20 verdrehbar sind, um die Einbauposition zu erzielten.

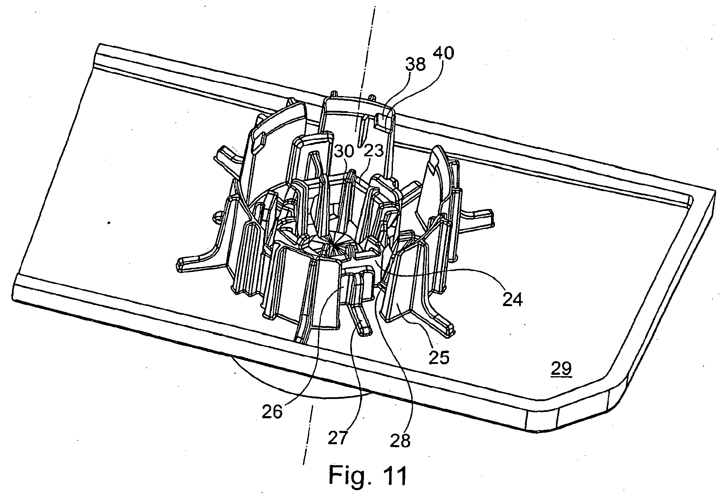

Figur 11 zeigt eine gegenüber dem vorgenannten Ausführungsbeispiel verschiedene Art der Kodierung.

Ein tankseitiger Anschlusssockel 23 weist eine sechskantförmige Außenkontur auf, dessen umfangseitige Außenfläche eine Dichtfläche 24 bildet. Außerhalb um den Sockel 23 sind Außenschalen 25 angeordnet, die geeignet sind, ein Filterpatronengehäuse bzw. dessen Anschlussbereich von außen wenigstens teilweise zu umschließen.

Im Zwischenraum zwischen dem Anschlusssockel 23 und den Außenschalen 25 sind Sperrelemente 26 angebracht, die sicherstellen, dass nur eine schmale, auf die Dichtfläche 24 passende Dichtung in den Bereich des Anschlusssockels 23 eingeführt werden kann.

Bodenrippen 27, 28 verhindern eine Abdichtung gegenüber dem Tankboden 29, ebenso wie Innenrippen 30 das Abdichten mittels einer inneren Radialdichtung verhindern. Durch diese Strukturen ist einzig und allein die Dichtfläche 24 als Dichtfläche zugänglich, so dass durch die Sechskantaußenkontur der Dichtfläche 24 eine erfindungsgemäße Kodierstruktur vorliegt.

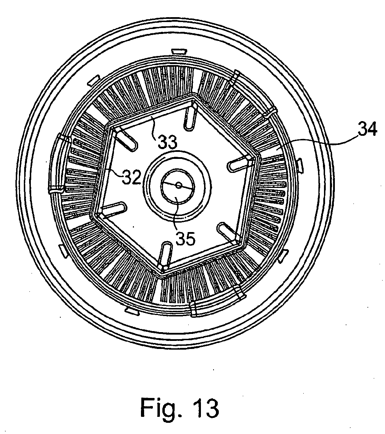

Die eingesetzte Filterpatrone 31 ist mit einer Formdichtung 32 versehen, die dementsprechend ebenfalls einen Sechskantquerschnitt aufweist (vergleiche Figur 13). Die Innenfläche der Formdichtung 32 bildet dabei die Dichtfläche 33.

In Figur 13 sind darüber hinaus die Eintrittsschlitze 34 zur Wasserzufuhr in die Filterpatrone sowie eine Abflussöffnung 35 für die Wasserabfuhr erkennbar.

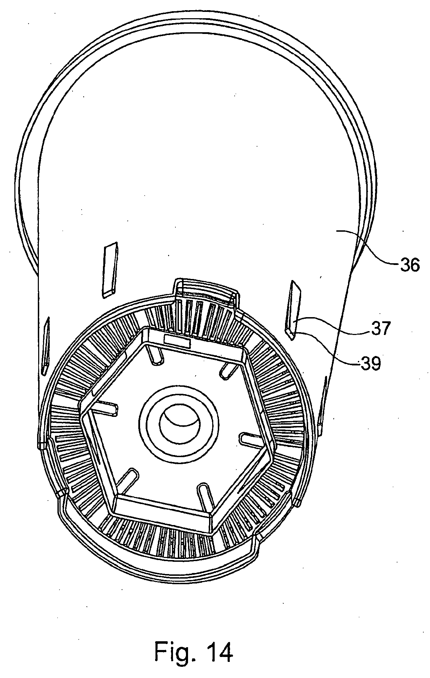

Über die Formdichtung 32 mit entsprechend geformtem Anschlusssockel 23 umfasst die dargestellte Ausführungsform noch weitere Kodierungsstrukturen. So sind außen am Filterpatronengehäuse 36 Schnappelemente 37 (vgl. Figur 14) angeformt. Die Schnappelemente 37 sind in entsprechende Aufnahmen 38 der Außenschalen 25 einführbar. Beim Aufsetzen der Unterkante 39 am Anschlag 40 der Aufnahmen 38 ergibt sich ein Druckpunkt. Bis in diese Position lässt sich die Filterpatrone 31 leicht ohne Gegenwiderstand in der richtigen Winkelposition aufsetzen. In dieser Winkelposition befindet sich die Formdichtung 32 ausgerichtet gegenüber der Dichtfläche 24 des Anschlusssockels 23, so dass sie in axialer Richtung weiter einführbar ist. Durch weiteres Eindrücken in axialer Richtung schnappt das Schnappelement 37 über den Anschlag 40, wobei die Formdichtung 32 entlang der Dichtfläche 24 eingedrückt wird. Durch die Abschrägung der Schnappelemente 37 und die entsprechende Innenform der Außenschalen 25 wird die Filterpatrone 31 in den Außenschalen 25 fixiert. Weitere axiale Fixierungselemente sind in dieser Ausführungsform nicht mehr erforderlich.

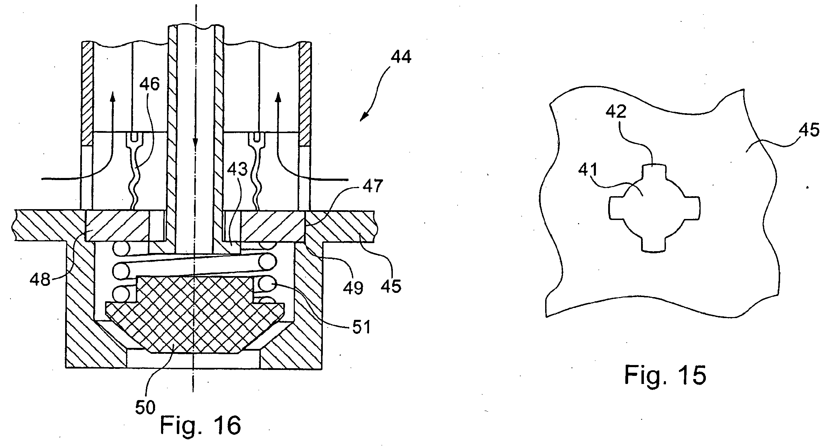

Eine weitere nicht erfindungsgemäße Ausführungsvariante ist in Figur 15 dargestellt. Figur 15 zeigt einen Bodenausschnitt eines Tanks, der eine Bodenöffnung 41 aufweist, die durch ihre Kontur als Schlüsselloch dient. Beispielsweise ist die Außenkontur im vorliegenden Ausführungsbeispiel mit Nuten 42 versehen. Die Kontur dieser Bodenöffnung 41 ist als Kodierungsstruktur jedoch frei wählbar.

Angepasst an diese Kontur der Bodenöffnung 41 sind entsprechende Schlüsselelemente im filterseitigen Tankanschlussbereich 44 vorgesehen. Vorliegend sind Schlüsselelemente 43 hakenförmig ausgebildet, so dass sie durch die Nuten 42 durch den Tankboden 45 hindurchgeführt werden können und anschließend durch Verdrehen hinterschneidend den Boden 45 umgreifen. Auch hierdurch ist eine Art Bajonettverschluss realisiert. Durch diesen Verschluss wird die Filterpatrone am Boden 45 fixiert. Über eine Axialdichtung 46 ist der Zustrombereich wie mit aufwärts gerichteten Pfeilen dargestellt vom Abstrombereich (siehe abwärts gerichteten Pfeil) abgedichtet. Auch in dieser Ausführung ist die Strömungsführung im Filterbett beliebig gestaltbar.

Durch die Formgebung der Bodenöffnung 41 kann verhindert werden, dass in der Bodenöffnung 41 mit einer Radialdichtung gedichtet wird. Durch nicht näher dargestellte Rippen und/oder Nuten auf dem Boden 45 kann darüber hinaus verhindert werden, dass eine bodenseitige Abdichtung außerhalb des für die Axialdichtung 46 vorgesehenen Ortes möglich ist. Derartige Rippen können dabei auch so hoch ausgeführt werden, dass sie der Patrone außenseitig zusätzlich Halt geben.

In Figur 16 ist ein unterhalb des Bodens 45 angeordnetes Rückschlagventil eingezeichnet, das den Tank bei angehobenem Zustand abdichtet und das beim Aufsetzen in die zugehörige Maschine nach oben eingedrückt wird, so dass die entsprechende Öffnung freigegeben wird.

Eine Trennlinie 47 veranschaulicht eine mögliche Fertigungsart eines solchen tankseitigen Filteranschlusses. Das Schlüsselloch bzw. die Bodenöffnung 41 ist hierbei in einer Scheibe 48 angeordnet, die separat vom sonstigen Tank gefertigt wird. Auf diese Weise kann der Tank und insbesondere auch der dargestellte Bereich in einem Spritzvorgang gefertigt werden, so dass die Außeridichtigkeit zuverlässig gewährleistet werden kann. Anschließend wird eine Scheibe 48 eingelegt, was problemlos durch die Ringschulter 49 möglich ist. Die Scheibe 48 kann sodann auf beliebige Weise mit dem Tankboden 45 verbunden, beispielsweise verschweißt, insbesondere ultraschallverschweißt, werden. Vor dem Einlegen der Scheibe 48 kann darüber hinaus das Ventil, beispielsweise in Form des Ventilkörpers 50 mit Feder 51 eingesetzt werden.

Diese Bauweise bietet neben der günstigen Art der Fertigung auch die Möglichkeit, die Kodierung nicht erfindungsgemäß durch die Bodenöffnung 41 als Schlüsselloch äußerst flexibel und variabel zu gestalten, in dem lediglich eine andere Scheibe 48 eingesetzt wird. Die Kodierung auf unterschiedliche Tank- bzw. Maschinentypen ist hierdurch besonders einfach möglich. Die Anpassung einer zugehörigen Filterpatrone kann ebenfalls durch einfaches Abändern der nicht erfindungsgemäßen Schlüsselelemente 43 erfolgen, ohne dass hierzu aufwendige Maßnahmen an der Filterpatronen erforderlich sind. Bei dieser Ausführungsvariante ist die Bodenfixierung durch hintergreifende Schlüsselelemente 43 in Verbindung mit der Axialdichtung 46 von besonderem Vorteil, da die Fixierung und die Kodierung wenigstens teilweise durch die gleichen Bauelemente vorgenommen wird.

In einer nicht erfindungsgemäßen Abwandlung dieser Ausführungsform wird die Scheibe 48 nicht flach ausgestaltet, sondern als Dom oder Erhebung aus dem Tankboden ausgebildet, die sich ins Innere des Tanks erstreckt und auf der sodann die Filterpatrone fixierbar ist. Diese Ausgestaltung hätte den Vorteil, dass bereits vorhandene Ventilformen und Tankelemente im Bereich des Tankanschlusses beibehalten werden können.

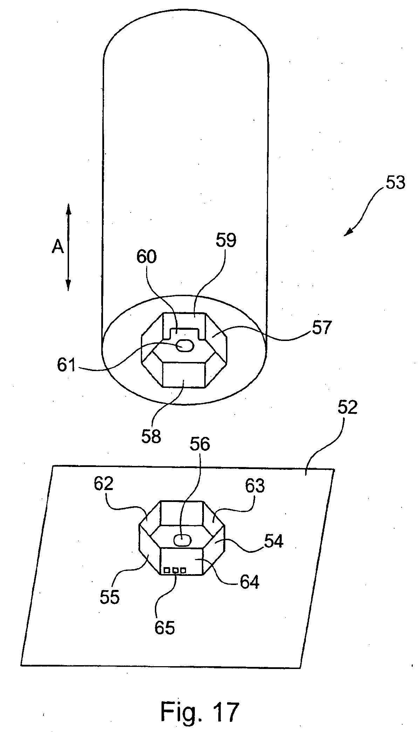

Fig. 17 zeigt eine schematisch dargestellte Ausführungsform mit winkelabhängig einstellbarer Verschnittmenge. Der Tankboden 52 ist nur ausschnittsweise im Anschlussbereich der Filterpatrone 53 dargestellt. Der Tankboden 52 umfasst einen sechskantförmigen Anschlusssockel 54, der nach oben hin nach Art eines Pyramidenstumpfes leicht konvergiert. Diese Querschnittsverjüngung ist in der perspektivischen Darstellung kaum zu erkennen.

Die Außenflächen 55 des Anschlusssockels dienen zugleich als Dichtfläche, um die Abflussleitung 56 bei aufgesetzter Filterpatrone 53 ganz oder teilweise gegenüber dem Innenraum des Tanks abzudichten.

Die Filterpatrone 53 weist eine zum Anschlusssockel 54 korrespondierende sechskantförmige Dichtung 57 auf. Die einzelnen Wände 58 sind mit Ausnahme einer Wand 59 in axialer Richtung A gleich lang ausgebildet. Die Wand 59 ist mit einer unterseitigen Aussparung 60 versehen, deren Funktion nachfolgend näher erläutert wird. Im Inneren der Dichtung 57 ist der Ausgang 61 aus der Filterpatrone 53 erkennbar, durch den das gefilterte Wasser in die Abflussleitung 56 gelangt.

Verschiedene Sockelwände 62, 63, 64 des Anschlusssockels 54 sind mit einer unterschiedlichen Anzahl von Bypassöffnungen 65 versehen. Die Bypassöffnungen 65 sind so angeordnet, dass sie von den länger ausgebildeten Dichtungswänden 58 beim Aufstecken der Filterpatronen 53 dicht verschlossen werden. Lediglich dort, wo die Wand 59 mit Aussparung 60 zum Einsatz kommt, können die Bypassöffnungen 65 geöffnet bleiben, so dass über die Aussparung 60 gefiltertes Wasser unmittelbar aus dem Tank zum Bereich der Abflussleitung 56 gelangt.

Wie anhand des dargestellten Ausführungsbeispiels unschwer erkennbar ist, wird durch die Winkelanordnung der Filterpatronen, d.h. mit der Auswahl der Sockelwand 62, 63, 64, an der die Aussparung 60 angesetzt wird, die Größe des freien Querschnitts der Bypassöffnungen 65 eingestellt.

In der vorliegenden Ausführungsform summieren sich die Querschnittsöffnungen der mehrfach angebrachten Bypassöffnungen 65. In anderen Ausführungsformen können auch einfach unterschiedlich große Bypassöffnungen. 65 vorgesehen werden. Durch die unterschiedlichen Querschnitte einzelner Bypassöffnungen 65 oder in der Summe mehrerer Bypassöffnungen 65 an einer Sockelwand, beispielsweise der Sockelwand 64, ergeben sich unterschiedliche Anteile an ungefiltertem Wasser, die gefilterten Wasser beigemengt werden. Es ergibt sich somit eine Verschnitteinstellung, die abhängig ist von der Winkelposition der Filterpatrone 53.

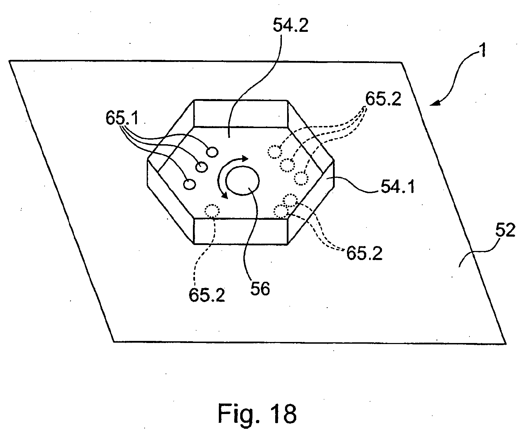

Eine weitere, mögliche Ausführungsform einer Verschnitteinstellung kann z.B. durch die Ausbildung eines durch die Filterpatrone betätigbaren Mitnehmerelementes in der Form eines in seiner Position drehbar verstellbaren Anschlusssockels 54.1 entsprechend der Darstellung in der Figur 18 realisiert werden. Der Boden 54.2 des drehbaren Anschlusssockels 54.1 weist hier beispielhaft drei Bypassöffnungen 65.1 auf und kann je nach Drehposition gegenüber dem Tankboden 52 so angeordnet werden, dass im Tankboden 52 angeordnete, komplementäre Bypassöffnungen 65.2 fluidleitend freigegeben bzw. verschlossen werden.

In dieser Darstellung sind rein beispielhaft vier unterschiedliche Einstellungen dargestellt, die gezeigte Drehposition mit verschlossenem Bypass und drei weitere Positioniermöglichkeiten, mit der Freigabe von jeweils einem, zwei oder allen drei Bypasslöchern 65.1 durch Übereinstimmung in ihrer Lage mit den entsprechenden Bypasslöchern 65.2. Eine mögliche Trennvariante zwischen den mit dem tankseitigen Frischwasseranschluss verbundenen Bypasslöchern 65.1 und der beispielhaft zentral angeordneten Abflussleitung 56 wäre die Anordnung einer dazwischen liegenden Dichtung, insbesondere und vorzugsweise einer Axialrichtung, die sich zwischen der Stirnseite des filterseitigen Tankanschlusselementes und dem Boden 54.2 des Anschlusssockels 54.1 dichtend erstreckt. Denkbar sind durchaus aber auch andere ggf. auch zusätzliche trennende und/oder dichtende Elemente zwischen der Frischwasserseite und der Seite des gefilterten Wassers.

Neben den dargestellten Ausführungsformen sind ohne weiteres auch weitere Ausführungsformen und/oder Kombinationen mit dieser Ausführungsform denkbar. So können beispielsweise die bisher beschriebenen Kodierungsstrukturen in der Form von beispielhaft dargestellten, sechskantigen Polygonen durch andere Kodierstrukturen, wiederum beispielhaft z. B. in der Form von Vierkantpolygonen ergänzt und/oder kombiniert werden, wie sie beispielsweise durch eine Ausführungsform der Figur 6 zusätzlich beispielhaft gezeigt ist.

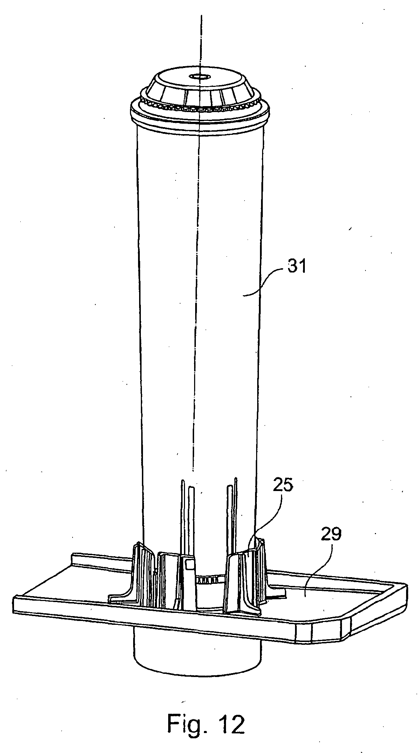

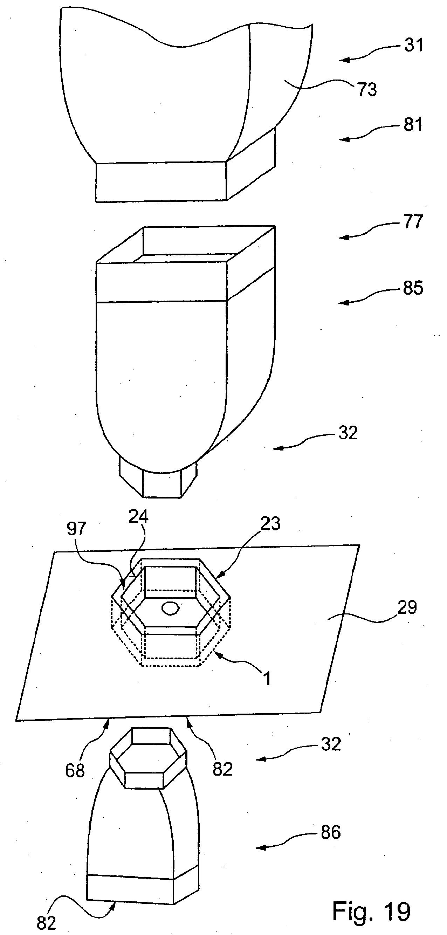

Die Figur 19 zeigt schließlich neben einer im Vergleich zu den Ausführungsformen in den Figuren 11 bis 14 und 17 beschriebenen Sockel-Filterverbindung in der Form eines axialen Vorsprungs 23 am tankseitigen Filteranschlusselement 23 eine komplementäre Form als im Tankboden 29 ausgebildete axiale Ausnehmung 23, bei der sinngemäß alle zu der ersten Ausführungsform beschriebenen Kodierungsmöglichkeiten auch hier realisiert werden können, und zwar gleich.

Als zweites wesentliches Merkmal zeigt die Figur 19 die Möglichkeit der Verwendung von Adaptern 85, 86. Der Adapter 85 ist rein beispielhaft zum Anschluss einer ebenfalls beispielhaft dargestellten Filterpatrone 73 an einen tankseitigen Filteranschluss 1 dargestellt, wobei die Ausführungsform des Filteranschlusses 1, insbesondere seines Sockels 23, wie oben bereits dargelegt, sowohl als axial vorstehender Sockel als auch als axial vertieft ausgebildete Nut realisiert sein kann. Aufgrund der sinngemäß gleichen Funktionalitäten sind auch die einzelnen Elemente mit den gleichen Nummerierungen versehen, wie zum Teil bereits oben in der Beschreibung verwendet. Von der Darstellung von Details zur Verschneidevorrichtung wurde aus Übersichtsgründen unter Verweis auf die Beispiele in den Figuren 17 und 18 abgesehen, derartige Ausführungen sind aber auch hier in entsprechender Weise möglich.

Die dargestellten Ausführungsvarianten zeigen auch die unterschiedlichsten Kodierungsstrukturen, die erfindungsgemäß vorzusehen sind. In jedem Fall ist gewährleistet, dass nur entsprechend angepasste Filterpatronen mit Schlüsselfunktion in die entsprechenden tankseitigen Filteranschlüsse passen.

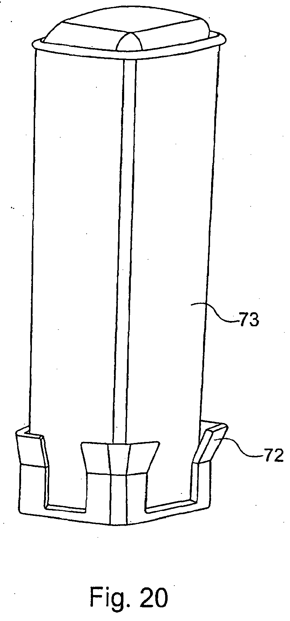

In einer weiteren Ausführungsform können beispielsweise die bisher beschriebenen Kodierungsstrukturen in der Form von beispielhaft dargestellten, sechskantigen Polygonen durch andere Kodierstrukturen, wiederum beispielhaft z. B. in der Form von Vierkantpolygonen ergänzt und/oder kombiniert werden, wie sie beispielsweise durch eine Ausführungsform der Figuren 20 bis 31 zusätzlich beispielhaft gezeigt ist.

Im Detail zeigt die Figur 20 einen Anschlusssockel 72, der in Draufsicht eine viereckige Kontur aufweist und in welcher eine entsprechend geformte Patrone 73 mit einem komplementären, ebenfalls im Querschnitt viereckigen Anschlussstück eingesteckt ist. Der Übersichtlichkeit halber wurde hier von der Darstellung des Tanks und des Tankbodens, mit welchem der Anschlusssockel 72 dichtend zu verbinden ist, abgesehen.

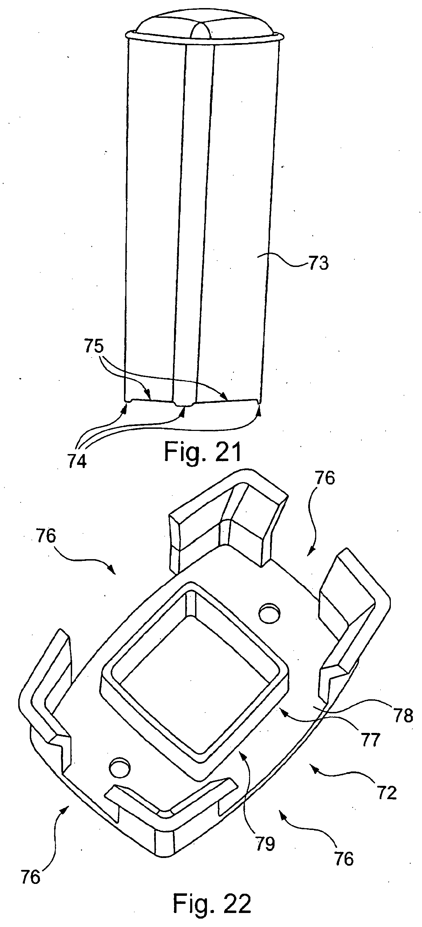

Die Figuren 21 und 22 zeigen die Patrone 73 und das Anschlusselement 72 jeweils in alleiniger Darstellung. Im unteren Bereich der Patrone 73 sind drei von vier vorgesehenen Füßen 74 erkennbar, zwischen denen jeweils eine für den Eintritt von Frischwasser ausreichend große Zulauföffnung 75 bei im Anschlusselement 72 eingesteckter Patrone 73 ausgebildet ist. Das Anschlusselement 72 weist entsprechend komplementäre Einlassöffnungen für den Durchtritt des Frischwassers aus dem Tank hin zur Filterpatrone 73 auf. Ein beispielsweise dem Anschlusssockel 23 entsprechender Anschlusssockel 77 ist beispielhaft zentral an einer Bodenplatte 78 des Anschlusselementes 72 ausgebildet, wiederum in Form eines Vorsprungs. Dieser als Vorsprung ausgebildete Anschlusssockel 77 weist an seiner äußeren Umfangfläche eine Dichtfläche 79 auf, die gegenüber einer komplementären, an der Filterpatrone angeordnete Aufnahmestruktur den Frischwasserbereich vom Bereich des durch den Filter gefilterten Wassers dichtend trennt. Auch in dieser viereckigen Ausführungsform kann in bevorzugter Weise dem Anschlusssockel 77 eine zumindest leicht konische Form aufgeprägt sein, so dass die aufzusetzende Patrone mit ihrem Anschlussstück einerseits leichter aufzusetzen ist und andererseits auch eine größere Fläche für die Abdichtung zwischen den beiden Elementen zur gegenseitigen Abdeckung gebracht werden kann.

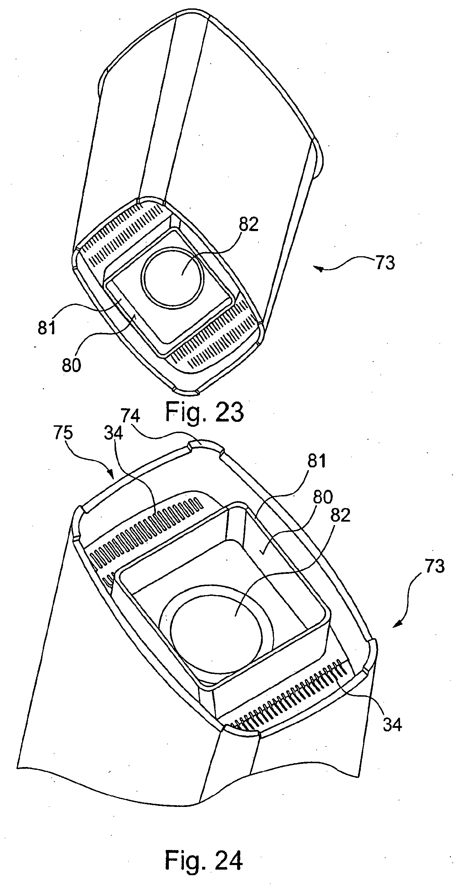

Die Figuren 23 und 24 zeigen jeweils eine Patrone 73 in einer Unteransicht, in welcher eine zum Anschlusssockel 77 komplementäre Formdichtung 81 mit einer darin ausgebildeten Dichtfläche 80 dargestellt ist. Zentral in der Mitte ist beispielhaft der Auslauf 82 für das gefilterte Wasser zu erkennen, welches durch die Zulaufsschlitze 34 in den Filter einströmen kann.

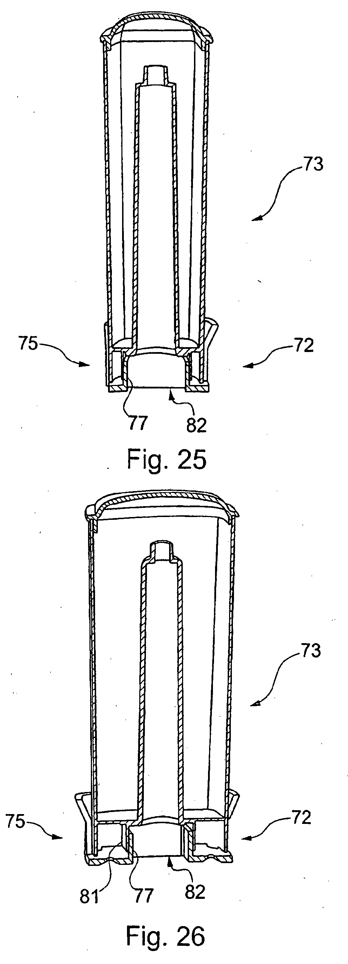

Die Figuren 25 und 26 zeigen jeweils einen Längsschnitt durch das Anschlusselement 72 und eine darin eingesteckte Patrone 73, einmal entlang der Breitseite (Figur 25) und einmal entlang der Längsseite (Figur 26), der in Draufsicht rechteckigen Anschlussstruktur.

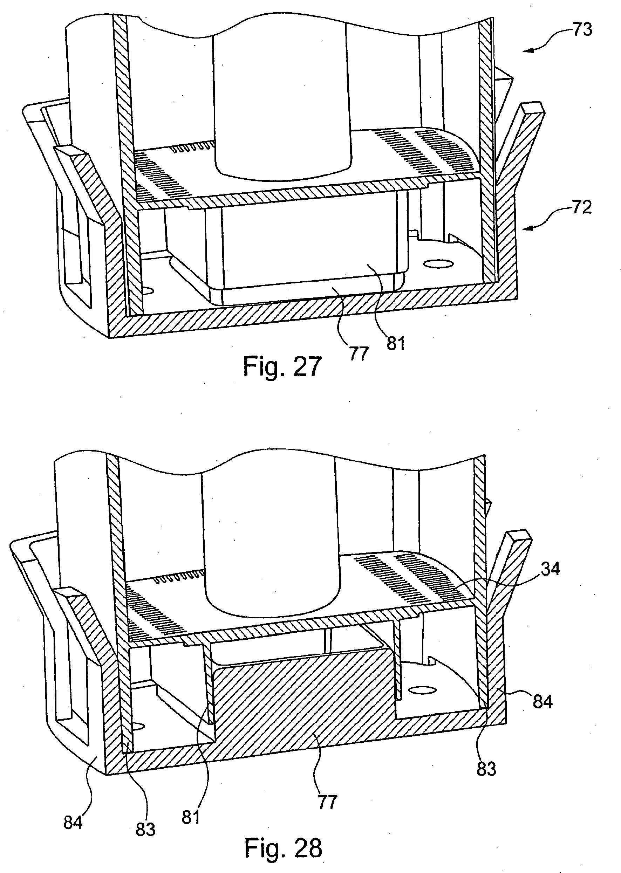

Die Figuren 27 und 28 zeigen zwei Ausschnitte im Verbindungsbereich zwischen Anschlusssockel 77 und Patrone 73 mit darin angeordneter Formdichtung 81, jeweils in unterschiedlich tief gelegener Schnittebene. Insbesondere in der Figur 28 ist gut zu erkennen, dass neben der formschlüssigen Verbindung zwischen der Formdichtung 81 und dem Anschlusssockel 77 auch eine fixierende Wirkung zwischen der verlängerten Außenwand 83, der Filterpatrone 73 und den Elementen der Außenschale 84 gegebenen ist, vorzugsweise ebenfalls in einer formschlüssigen Art und Weise.

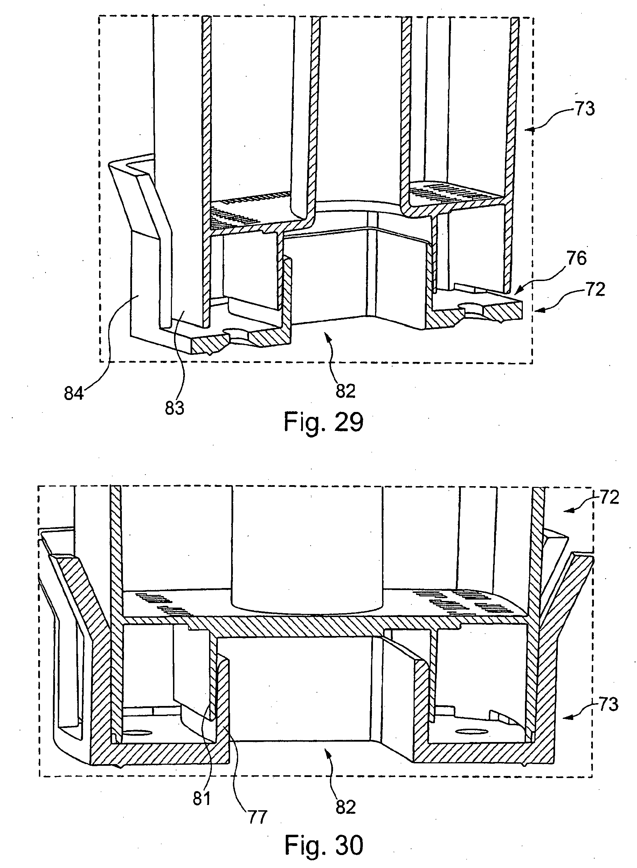

Die Figuren 29 und 30 zeigen zwei weitere Schnittdarstellungen entsprechend der Figuren 27 und 28, jedoch wiederum in verschieden tief liegenden Schnittebenen.

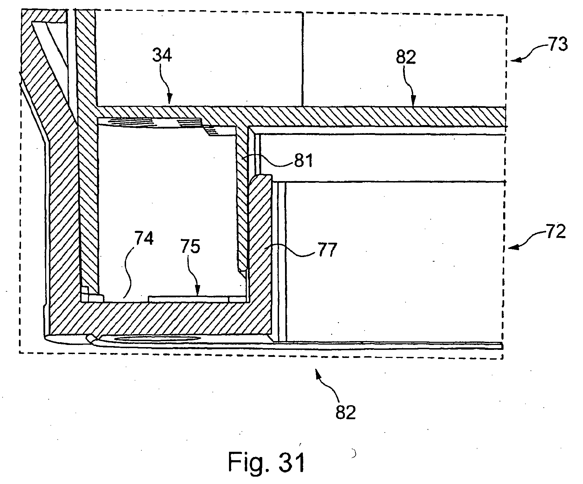

Die Figur 31 zeigt schließlich eine weitere, ausschnittsweise Darstellung in noch größerem Maßstab.

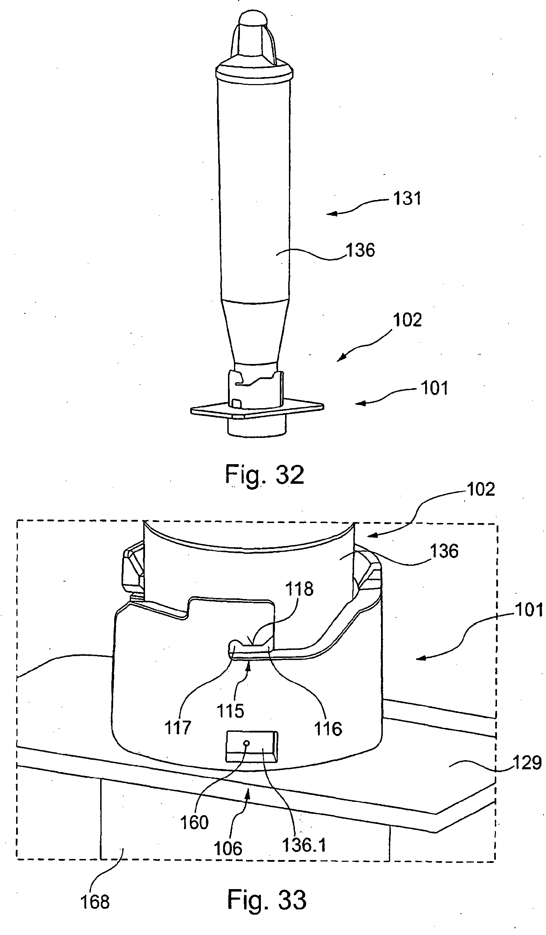

Nachfolgend werden noch weitere, mögliche nicht erfindungsgemäße Ausführungsformen beschrieben. In den Figuren 32 bis 39 wird ein Tank-Filterpatronen-Anschluss mit Verschnitteinstellungselementen 106, 136.1, 160 und 165 sowie mit in Bezug auf eine Längsachse des Anschlusses axial ausgerichteten nicht erfindungsgemäßen Verschlüsselungs- bzw. Kodierungsstrukturen in Kombination mit einer weiteren Ausführungsform einer Formschlussdichtung beschrieben. Der Einfachheit halber werden bereits zu den zuvor beschriebenen Ausführungsformen entsprechende Merkmale mit der gleichen Grundnummerierung, jedoch um die Nummer 100 erhöht bezeichnet.

Demnach zeigt die Figur 32 einen nicht erfindungsgemäßen tankseitigen Anschlussstutzen 104 in welchem eine Filterpatrone 131 über einen filterseitigen Tankanschlussstutzen 101 angeschlossen ist. Entsprechend der Figur 33 steckt das Gehäuse 136 der Filterpatrone 131 vollkommen im tankseitigen Anschlussstutzen 101. Das stirnseitige Ende des Patronengehäuses 136 ist in der Figur 33 hinter einem Durchlassschlitz 106 für den Zulauf des im Tank befindlichen Frischwassers in den Innenbereich des Anschlussstutzens 101 dargestellt. In diesem sichtbaren Abschnitt des Filterpatronengehäuses 136 ist eine Aussparung 160 in der Form einer Bohrung dargestellt, die die Funktion eines Verschnittelementes inne hat, und Frischwasser durch sie hindurch und durch eine weitere, dahinter angeordnete, hier nicht sichtbare Öffnung 165 in den Filterauslassbereich 135 strömen lässt, in welchem das von der Patrone gefilterte Wasser in den Tankauslass 168 geleitet wird. Die Verschnitteinstellung kann auch hier z.B. über entsprechende Drehpositionen verändert werden, sofern eine Ausführung mit verstellbare, wirksamem Verschneidequerschnitt vorgesehen ist. In einer einfachen Ausführung, wie dargestellt, ist auch eine feste Verschnitteinstellung möglich, die z.B. von einer Drehposition unabhängig ist.

Als eine von mehreren möglichen Fixierung der Filterpatrone 131 am tankseitigen Anschlussstutzen 101 sind an diesem eine nicht erfindungsgemäße Aufnahme-Führungsbahn 115 zur Aufnahme eines an der Filterpatrone ausgebildeten, radialen Vorsprungs 116 dargestellt. Beide weisen ein jeweils zum Anderen komplementäres Rastelement 117 und 118 auf, die nach einer entsprechenden Drehbewegung beim Einsetzen des filterseitigen Tankanschlusselementes 102 nach Überwindung entsprechender Spannkräfte des etwa flügelartig vom tankseitigen Anschlussstutzen abstehenden Teils schnappend ineinander einrasten. Dadurch, dass das Rastelement 117 in seinem vorderen Bereich eine Verdickung aufweist, bezogen auf eine für den Einsatz der Filterpatrone erforderliche Drehbewegung, der eine entsprechend groß ausgesparter Bereich im Rastelement 118 gegenübersteht, kann damit eine positionssichernde Verrastung der beiden Anschlusselemente miteinander gewährleistet werden.

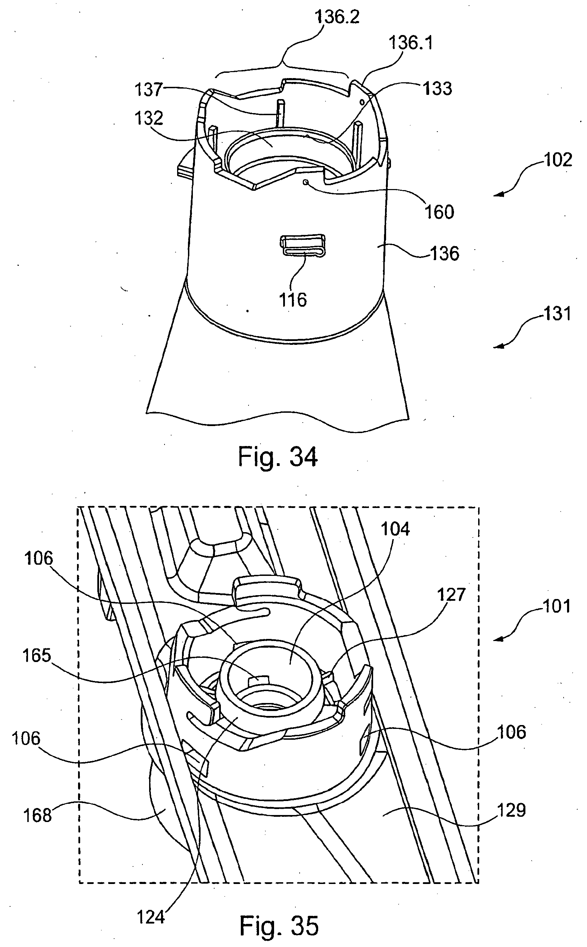

In der Figur 34 ist der nicht erfindungsgemäße filterseitige Tankanschlussbereich in der Filterpatrone 131 dargestellt, wobei das Gehäuse 136 im vorderen, stirnseitigen Bereich einem gegenüber Aussparungen 136.2 vorstehenden Vorsprung 136.1 aufweist, jeweils die bereits oben beschriebene Durchlassöffnung 160 als Verschnittelement umfassend. Die. Vorsprünge 136.1 des Filterpatronengehäuses 136 stellen ihrerseits axial ausgerichtete Kodierstrukturen dar, die einen betriebsgemäßen Einsatz der Filterpatrone im betreffenden Tankanschlusselement ermöglichen. Sobald eines dieser nicht erfindungsgemäßen axialen Kodierungs- bzw. Verschlüsselungselemente in der Form der Gehäuseüberstände 136.1 fehlt, fließt im Tank befindliches Frischwasser direkt durch die einen entsprechend großen Querschnitt aufweisende Durchlassöffnung 106 und die dahinter liegende, ebenfalls einen entsprechend großen Querschnitt aufweisende weitere Bypassöffnung 165 direkt in ein Sammel- oder Lagergefäß oder in den Geräteanschlussbereich 168.

Eine gegebenenfalls eingesetzte Filterpatrone ohne entsprechende axial vorstehende Gehäuseflügel 136.1 wäre in diesem Fall aufgrund des großen Durchflusses von Frischwasser in den Zulaufbereich des Geräteanschlusses ohne Filterwirkung, wie dies deutlich aus der Figur 35 zu erkennen ist.

Die hier beschriebene Ausführungsform weist jeweils drei axial ausgerichtete Kodierstrukturen 136.1 am Filtergehäuse 136 auf, die insbesondere bevorzugt um 120° versetzt stirnseitig am Umfang des filterseitigen Tankanschlusselementes 102 angeordnet sind, wie aus der Figur 9 gut entnehmbar. Die komplementären Anschlusselemente des tankseitigen Filteranschlusses 101 zeigt die Figur 35.

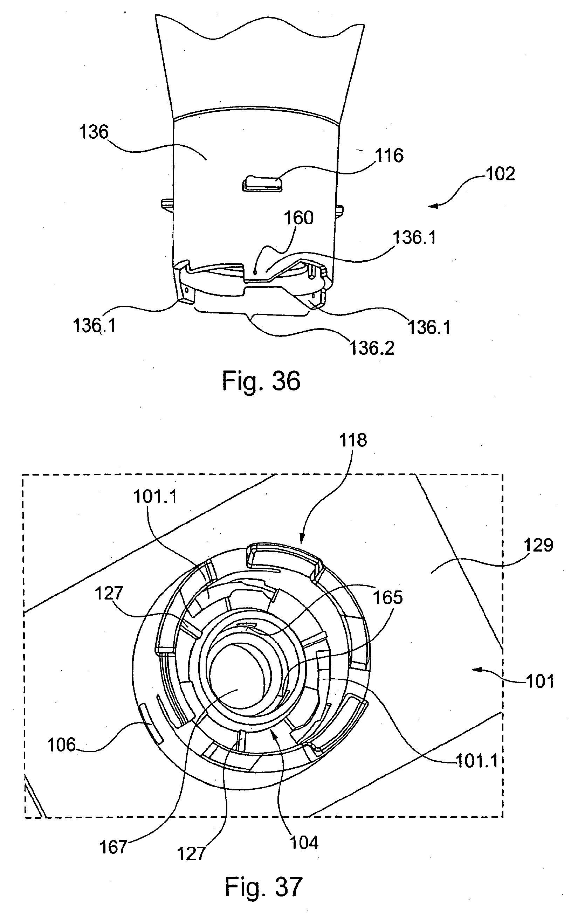

Die Figuren 36 und 37 zeigen zwei weitere Ansichten dieser nicht erfindungsgemäßen Ausführungsform eines Tank-Filter-Anschlusses 101, 102. Am tankseitigen Filteranschluss 101 sind hierbei drei axiale Ausnehmungen 101.1 dargestellt, die im Tankboden 129 vertieft eingelassen sind um die drei komplementären Gehäuseüberstände 136.1 der Filterpatrone aufnehmen zu können. Somit sind hier wiederum axiale Vorsprünge 136.1 bzw. komplementäre axiale Vertiefungen 101.1 als Verschlüsselungs- bzw. Kodierstruktur zur Verhinderung nicht für den Einsatzzweck vorgesehener Filterpatronen dargestellt.

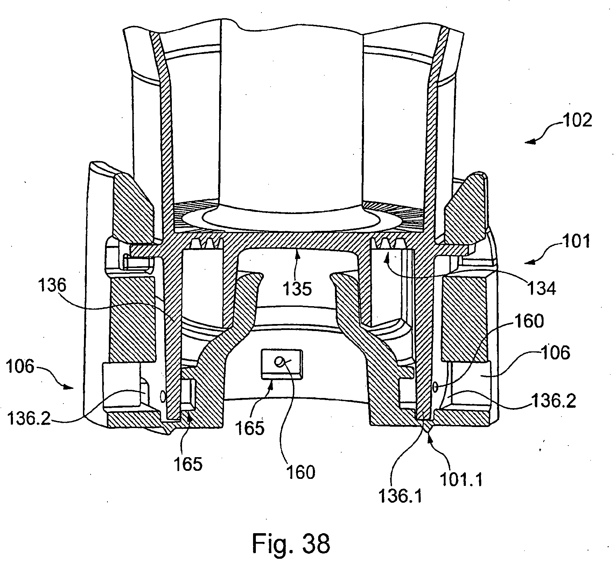

Die.Figur 38 zeigt einen Schnitt durch ein nicht erfindungsgemäßes tankseitiges Filteranschlusselement 101 in welchem ein filterseitiges Tankanschlusselement 102 eingesetzt ist. Im unteren, bodenseitigem Bereich des tankseitigen Filteranschlusselementes 101 sind hierbei die durch die drei Gehäuseüberstände 136.1 im Wesentlichen verschlossenen Bypass- bzw. Kurzschlussöffnungen 165 zur erkennen. Bei eingesetzter Filterpatrone wird die Bypassfunktion realisiert, so dass eine bestimmte Menge an Frischwasser dem von der Filterpatrone gefilterten und durch den Auslass 135 austretenden Filterwasser beigemengt wird. Bei fehlender Patrone ist diese axiale Kodierstruktur wirkungslos bzw. kann dieser tankseitige Filteranschluss nur zur ungefilterten Durchleitung des im Tank befindlichen Frischwassers genutzt werden.

Bei eingesetzter Patrone kann durch die Aussparungen 136.2 durch den Schlitz 106 eintretendes Frischwasser im Inneren des Anschlussstutzens 104 aufsteigen und durch die Eintrittsschlitze 134 in die Filterkammer der Filterpatrone eintreten, durch das Filter hindurch fließen und aus der Filterauslassöffnung 135 in ein Sammel- oder Lagergefäß oder in die Geräteanschlussleitung des Tanks bzw. des Gerätes weitergeleitet werden.

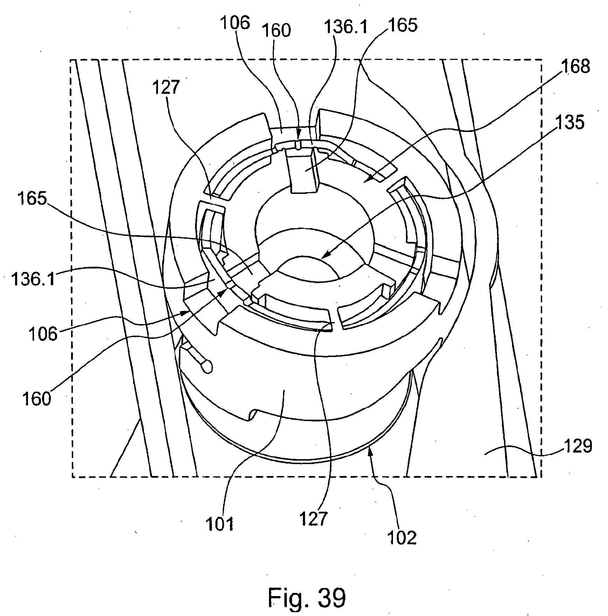

Die Figur 39 zeigt eine weitere Schnittansicht durch den Tankboden 129 und einen damit verbundenen nicht erfindungsgemäßen tankseitigen Filteranschluss 101 sowie einen darin nicht erfindungsgemäßen eingesetzten filterseitigen Tankanschluss 102 von der Bodenseite des Tanks her betrachtet. Darin sind die Bypass- bzw. Kurzschlussleitungen 106 und 165 sehr gut zu erkennen, die eine entsprechende Durchleitung des ungefilterten Frischwassers in den Tankablaufbereich 168 zeigen. Bei, wie im gezeigten Beispiel, eingesetzter Patrone mit korrekter axialer Kodierung erfolgt ein entsprechend vorgesehener Verschnitt des zu filternden Frischwassers durch die in den flügelartig vorstehenden Gehäuseabschnitten 136.1 ausgebildeten Bypasslöcher 160.

Anstelle der hier beispielhaft gezeigten, 120° versetzten drei axialen Kodierstrukturen können vier, fünf oder beispielsweise sechs solche Strukturen ausgebildet sein. Der Abstand der einzelnen komplementären axialen Kodierstrukturen kann dabei entweder symmetrisch oder aber auch unsymmetrisch ausgebildet sein.

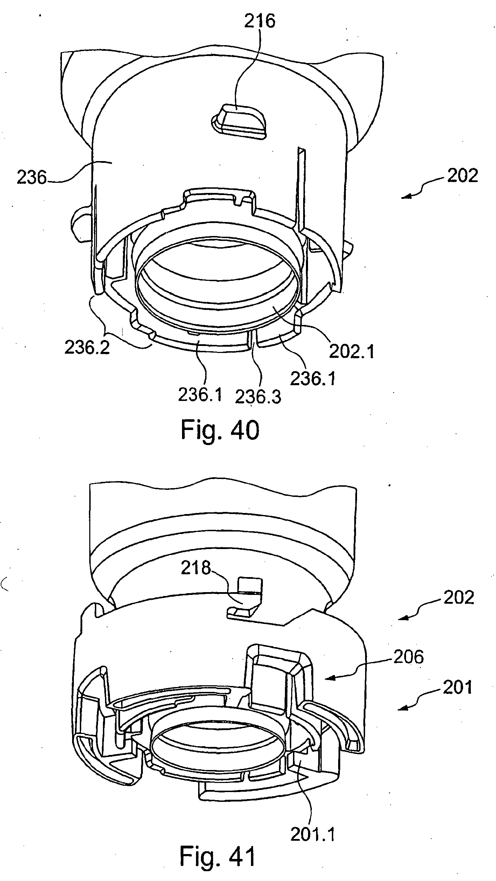

Die Figuren 40 bis 45 zeigen eine weitere, mit dem Nummernkreis 200 bezeichnete nicht erfindungsgemäße Ausführungsform einer axial kodierten Tank-Filter-Anschlussstruktur 201 und 202, hier in der Kombination mit einer Axialdichtung 202.1. Auch hier sind gleiche Merkmale wie bereits beschrieben mit der gleichen Grundnummerierung versehen. Die Axialdichtung 201.1 ist in der Form einer kreisrunden elastisch verformbaren Dichtlippe mit einer gewissen axialen Längserstreckung ausgebildet, um insbesondere in vorteilhafterweise auch gewisse axiale Einsatztoleranzen sicher und zuverlässig dichtend ausgleichen zu können.

Auch hier finden sich nicht erfindungsgemäße axial ausgerichtete Kodierstrukturen als axiale Vorstände 236.1 des Filtergehäuses 236 und axiale Ausnehmungen 236.2, entsprechend der zuvor beschriebenen Ausführungsform mit dem Nummernkreis 100. Zusätzlich finden sich hier weitere axial ausgerichtete Kodierstrukturen 236.3 als Schlitze im stirnseitigem Gehäusevorstand 236.1 ausgebildet, die sowohl zur Kodierung als auch gegebenenfalls für den Zulauf von Frischwasser in den Innenbereich des filterseitigen Anschlusssockels dienen können.

Den nicht erfindungsgemäßen axialen Kodierungsstrukturen 236.2 und 236.3 sind im tankseitigen Filteranschlusssockel 201 komplementär geformte, axiale Anschlusskodierstrukturen in der Form von axial vom Tankboden vorstehenden Vorsprüngen 201.1 zugeordnet, wie das in der Figur 41 dargestellt ist. Grundsätzlich könnte diese Ausführungsform die Umkehrung der Kodierstruktur der zum Nummernkreis 100 beschrieben Ausführungsform, darstellen. Beide Ausführungsformen stellen aber nur mögliche Beispiele dar und können durchaus abgewandelt und/oder durch weitere Kodierstrukturen und Dichtungsvarianten ergänzt und/oder ersetzt werden.

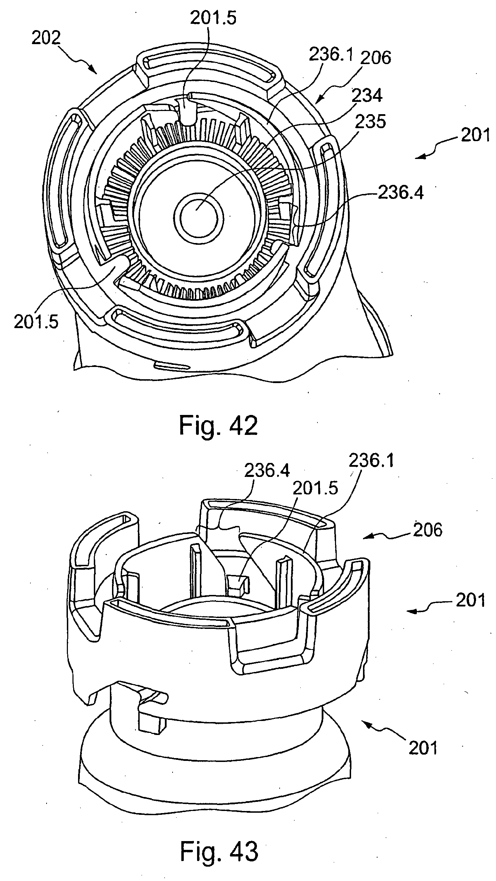

Die Figur 42 zeigt eine Unteransicht auf einen nicht erfindungsgemäßen tankseitigen Filteranschluss 201 und einen darin eingesetzten, nicht erfindungsgemäßen filterseitigen Tankanschluss 202 mit einer leicht veränderten axial kodierten Anschlussstruktur 236.4 und 201.5 gegenüber der oben beschriebenen axial kodierten Anschlussstruktur 236.1, 236.2, 236.3 und 201.1. Die filterseitige Ausnehmung 236.4 ist hier in der Form eines schräg verlaufenden und stirnseitig am Filtergehäuse 236 mündenden Schlitzes ausgebildet, der zur Aufnahme eines radial vom tankseitig Filteranschlusselements 201 nach innen weisenden, nasenförmigen Kodierelementes 201.5 geeignet ist. Der schräge Verlauf des Schlitzes 236.4 berücksichtigt hierbei eine axiale Einsatzbewegung die zur Fixierung der Filterpatrone 231 mit einer abschließenden Drehbewegung fixiert werden soll Figur 43. Eine Filterpatrone ohne eine entsprechend axial ausgerichtete, schlitzförmige Ausnehmung 236.4 kann in einen so kodierten tankseitigen Filteranschlusssockel 201 nicht eingesetzt werden. Auch bei dieser Ausführungsform ist lediglich beispielhaft eine Dreipunktkodierung in einer bevorzugt 120° versetzten Positionierung vorgesehen, die aber nicht zwingend ist und durchaus durch andere Positionierungen ergänzt und/oder abgeändert werden kann.

Die Kodierstrukturen 216 und 236.2 bilden im Weiteren gemeinsam beispielhaft eine nicht erfindungsgemäße Doppel- bzw. Mehrfach-Bajonettstruktur aus. Hier in der Kombination einer nicht erfindungsgemäßen axial und einer radial ausgerichteten Kodier- und/oder Fixierstruktur.

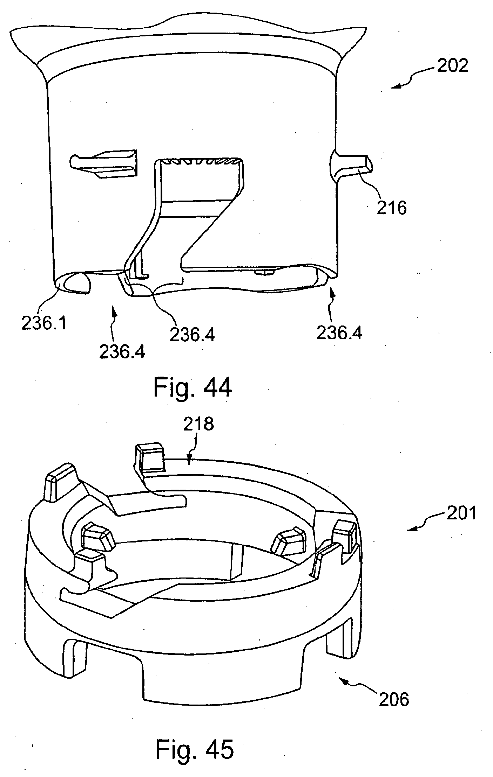

Die Figuren 44 und 45 zeigen die beiden oben beschriebenen nicht erfindungsgemäßen Elemente und deren wesentliche Merkmale jeweils in separater Darstellung.

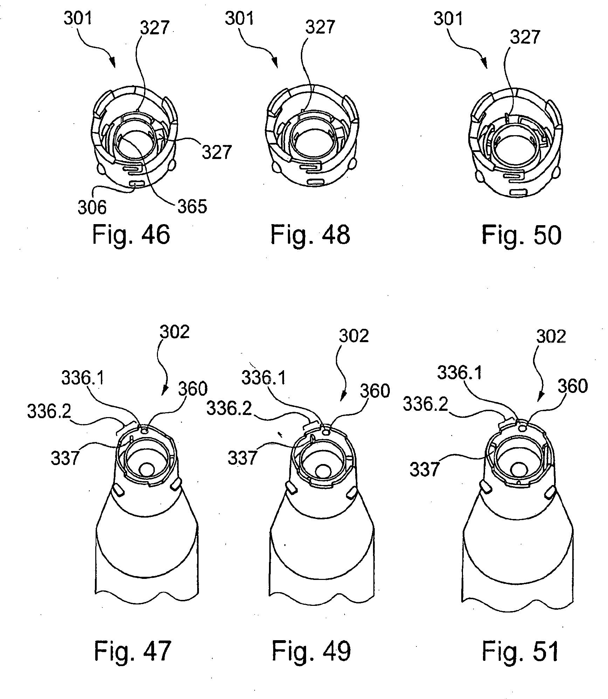

Die Figuren 46 bis 51 zeigen weitere nicht erfindungsgemäße Ausführungsformen von tankseitigen Filterausschlusselementen und filterseitigen Tankanschlusselementen, die mit Verschnittstrukturen 306, 336.1 und 365 einer Verschnittvorrichtung im Sinne obiger Ausführungen zu den Nummernkreisen 0 bis 99 und 100 aufwärts im Wesentlichen bereits beschrieben sind. Dementsprechend sind der Einfachheit halber auch hier, bereits zu den zuvor beschriebenen Ausführungsformen beschriebene Merkmale mit der gleichen Grundnummerierung bezeichnet, aber um die Nummer 300 erhöht. Auch sie weisen axial kodierte Anschlussstrukturen auf, bei denen beispielhaft über den Umfang betrachtet axiale Kodierstrukturen 336.1, 336.2 und 337 für die jeweils dargestellten, filterseitigen Tankanschlüsse ausgebildet sind, die zur Unterscheidung untereinander jeweils in unterschiedlichen Winkelpositionen zueinander angeordnet sind. Die tankseitigen Filteranschlüsse 301 zeigen die komplementären axial kodierten Anschlussstrukturen der jeweils zugehörigen tankseitigen Filteranschlusselemente als weitere mögliche Ausführungsformen unterschiedlicher Kodierstrukturen.

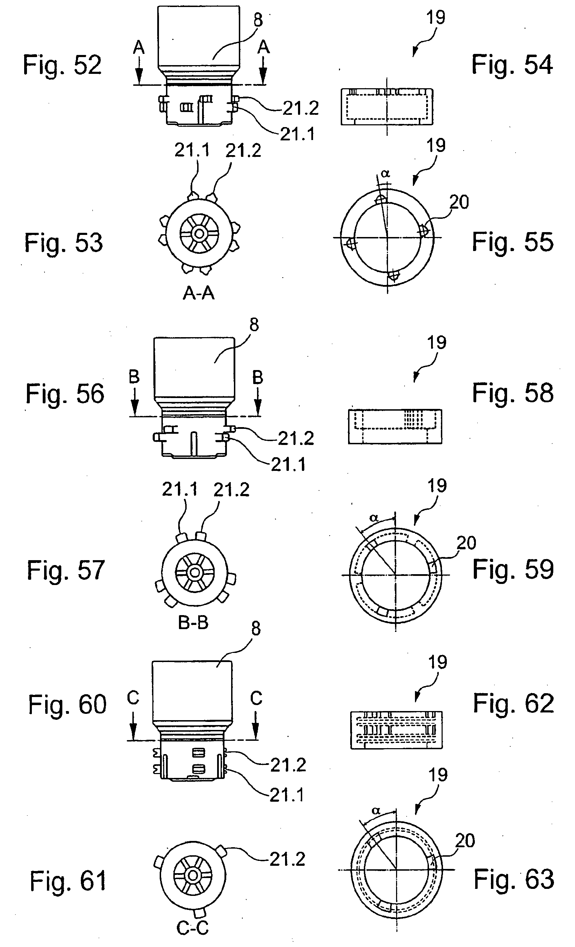

Die Figuren 52 bis 63 zeigen weitere mögliche Ausführungsformen von nicht erfindungsgemäßen Verschlüsselungs- und/oder Fixierungsstrukturen für Tank-Filter-Anschlusselemente. Hierbei zeigen die Figuren 52 bis 55 eine erste, die Figuren 56 bis 59 eine zweite und die Figuren 60 bis 63 eine dritte mögliche nicht erfindungsgemäße Ausführungsform von Bajonettverbindungen, insbesondere Doppel- bzw. Mehrfach-Bajonettverbindungen als Ergänzung zu den bereits in den Figuren 4 bis 10 dargelegten Ausführungsformen.

Der Schwerpunkt bei den nicht erfindungsgemäßen Ausführungsformen der Figuren 52 bis 63 liegen dabei in der Darstellung unterschiedlich möglicher Kodierungen in der Form von Doppel- bzw. Mehrfach-Bajonettverbindungen bzw. Schlüsselkodierungen in der Form von Schlüsselschlossfunktionen. Die Figuren 52 und 53 zeigen die filterseitige Tankanschlusskodier- bzw. Fixierstruktur mit in Draufsicht entsprechender Figur 53 acht Vorsprüngen 21.1 und 21.2, die entsprechend der Figur 52 entlang der Längserstreckung des filterseitigen Tankanschlusselementes sowohl axial als auch in einer radialen Winkelstellung zueinander versetzt als zwei Viererpaare ausgebildet sind.

Die komplementären nicht erfindungsgemäßen Anschluss- bzw. Kodierstrukturen 20 sind im tankseitigen Filteranschlusselement 19 in den Figuren 54 und 55 gezeigt. In dieser Ausführungsform ist entsprechend der Figur 55 ein Winkel α zwischen einer Achse eines eingezeichneten x-y-Koordinatensystems und einer durch die Öffnung 20 verlaufenden Achse als vergleichsweise spitzer Winkel α dargestellt. Um eine Fixierung des filterseitigen Tankanschlusselementes 8 am tankseitigen Filteranschlusselement 19 zu ermöglichen, müssen die stirnseitig zu vorderst angeordneten Kodiervorsprünge 21.1 entsprechend der umlaufenden Verteilung der Öffnungen 20 am tankseitigen Filteranschlusselement 19 verteilt angeordnet sein, so dass überhaupt ein axiales Einschieben des filterseitigen Tankanschlusselementes ermöglicht wird. Nach Überwindung der ersten Einschubtiefe bezüglich der Kodiervorsprünge 21.1 muss eine Drehung um eine durch das filterseitige Tankanschlusselement verlaufende Längsachse erfolgen, soweit bis der zweite Satz Kodiervorsprünge 21.2 in Übereinstimmung mit den Öffnungen 20 kommt und eine weitere axiale Einführung des filterseitigen Tankelementes in das tankseitige Filterelement ermöglicht, bis zu einer Fixierung nach einer weiter folgenden Drehbewegung um die Längsachse durch das filterseitige Tankanschlusselement.

Die Figuren 56 bis 63 stellen ähnliche nicht erfindungsgemäße Ausführungsformen dar, jedoch mit gegenüber den Ausführungsformen 52 bis 55 abgewandelten Konturen der Öffnungen 20 und der hierzu komplementären Kodiervorsprünge 21 sowie auch hinsichtlich axial und in Draufsicht betrachtet winkelig abgeänderter Ausrichtungen.

Ein weiterer Unterschied liegt auch in der Anzahl der jeweiligen Kodierstrukturen. In den Ausführungsformen 52 bis 55 sind es insgesamt acht auf zwei Ebenen und in den Ausführungsformen 56 bis 63 jeweils nur sechs als zwei dreifachkodierte Vorsprungsebenen. Auch diese hier beschriebenen Kodierstrukturen können ohne weiteres mit anderen z.B. axial ausgerichteten Kodierstrukturen kombiniert werden, um noch weitere Unterscheidungsmöglichkeiten für einzelne Tank-Filter-Anschlussverbindungen zu ermöglichen.

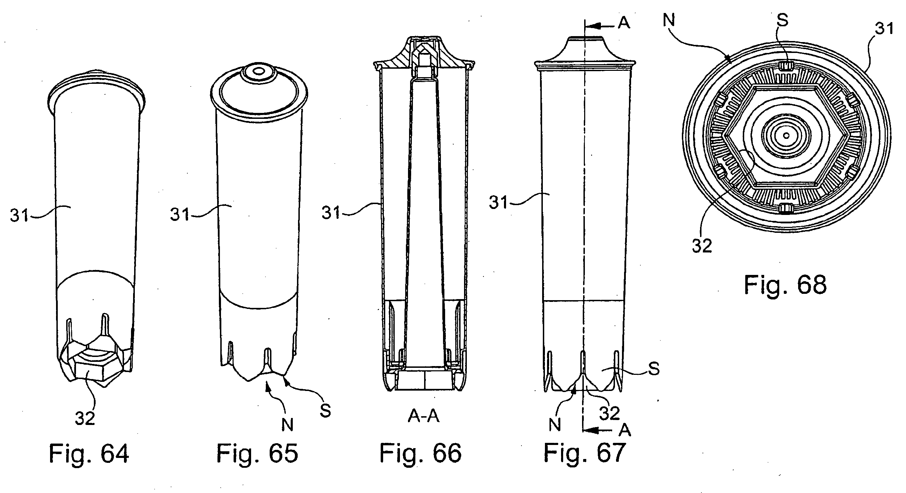

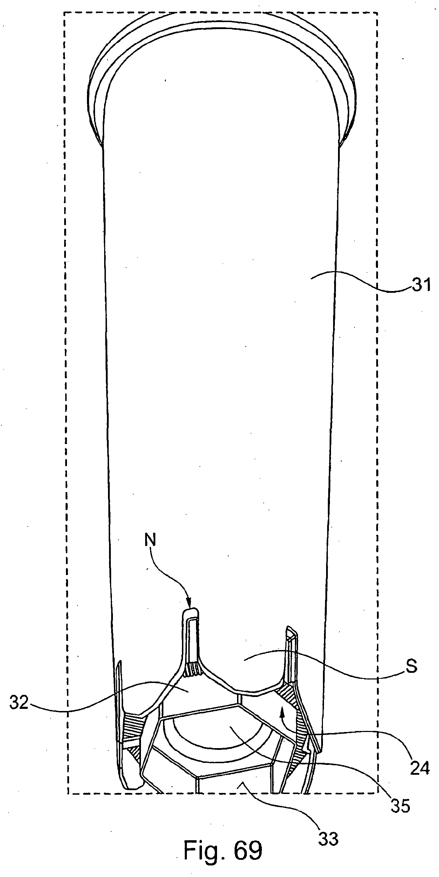

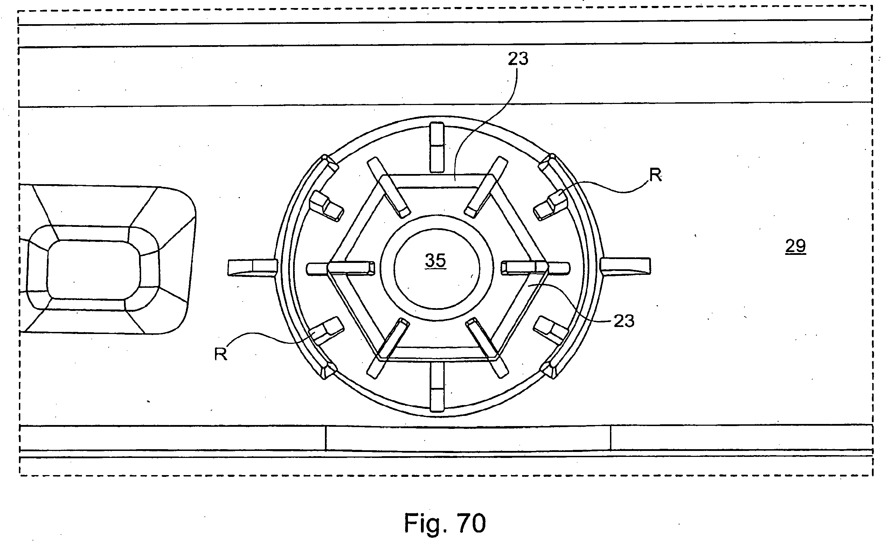

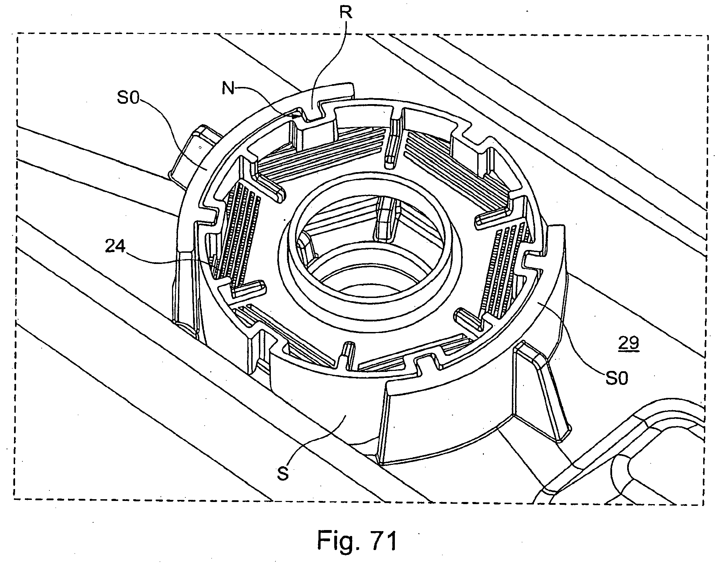

Die Figuren 64 bis 71 zeigen eine weitere Ausführungsform einer Tank-Filter-Anschlussverbindung in unterschiedlichen Ansichten und Darstellungen wie schräge Draufsichten, Schnittdarstellungen, Frontansicht und Unteransicht der Filterpatrone 29 sowie eine Draufsicht auf das tankseitige Filter-Anschlusselement mit und ohne eingefügtes filterseitiges Tank-Anschlusselement (Fig. 70 und 71).

Die wesentlichen Merkmale der Ausführungsform einer Tank-Filter-Anschlussverbindung sind die stirnseitig von der Filterpatrone 31 vorstehenden, etwa keilförmigen Spitzen S und die zwischen ihnen angeordneten Nuten N. Die geometrischen Abmessungen und Winkelstellungen dieser Spitzen S und Nutzen N zueinander ermöglichen wiederum unterschiedliche Kodierungen bzw. Fixierpunkte für das filterseitige Anschlusselement am tankseitigen Filteranschlusselement.

Die Spitzen können auch der Positionierung beim Einsetzen der Filterpatrone in den Tankanschlussstutzen dienen, insbesondere bei optisch nicht einsehbaren Anschlüssen, z.B. zur Vermeidung einer Beschädigung der Dicht- und/oder anderer Strukturen.

Insbesondere geeignet für eine Kodierung sind hierbei die Schlitzabstände und/oder die Schlitzbreiten und/oder die Breiten der Spitzen bzw. vorstehenden Flügel sowie ebenfalls deren Längen und/oder Abstände, die zu entsprechenden Strukturen am tankseitigen Filteranschlusselement korrespondieren müssen, um den Einsatz einer betriebsgemäß zugelassenen Filterpatrone zu ermöglichen.

Bei diesen korrespondierenden Kodier- und/oder Fixierstrukturen handelt es sich um am tankseitigen Filteranschlusselement ausgebildete Rippen R (figur 70), deren Zusammenwirken mit den am filterseitigen Tankanschlusselement ausgebildeten Kodier- und/oder Fixierstrukturen N und S am besten in der Figur 71 erkennbar sind. Die Rippen R sind hierbei an einem das filterseitige Tankanschlusselement teilweise umschließenden, wandförmigen Sockel SO ausgebildet.

Die oben beschriebene Kodier- und/oder Fixierstruktur kann in einer davon abgewandelten Ausführungsform auch komplementär ausgebildet sein, also Nuten anstelle von Rippen und Rippen anstelle von Nuten. In einer weiter abgewandelten Ausführungsform ist durchaus aber auch eine gemischte oder kombinierte Kodier- und/oder Fixierstruktur durch Ausbilden von Nuten und Rippen an dem einen und/oder anderen tank- bzw. filterseitigen Anschlusselementes möglich.

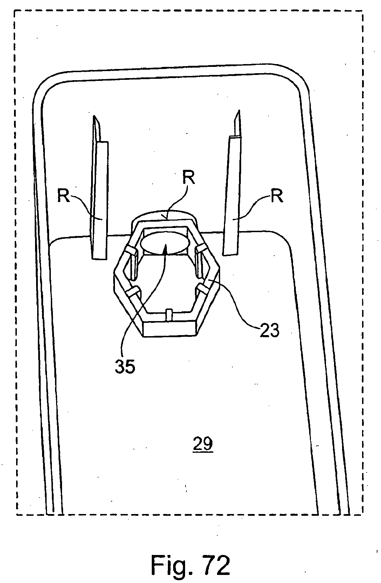

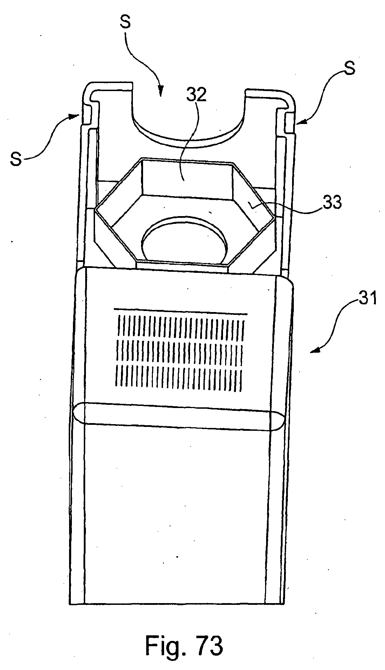

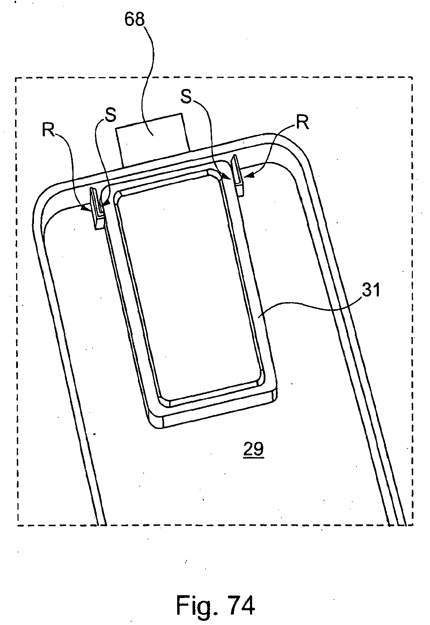

Die Figuren 72 bis 74 stellen eine weitere Ausführungsform dar, bei der der Filter 31 entlang an einer Tankwand angeordneten, zwei winkelig ausgebildete Rippen R aufweisenden und in zwei komplementäre Schlitze S eingreifenden Führung in das Innere des Tanks eingeschoben wird. Der Tank weist in seinem Boden 29 ein polygonförmiges, hier sechskantiges, Filteranschlusselement 23 und eine von innerhalb dieses Anschlusselementes durch die Tankwand nach außen führende Tankablauföffnung 35 auf.

Um einerseits eine ausreichende Wasserabfuhr durch diese wandseitig ausgebildete Tankablauföffnung 35 zu ermöglichen und andererseits eine möglichst vollständige Entleerung des Tanks, ist das polygonförmige Anschlusselement 23 als am Tankboden mit an seiner Oberseite abgeschrägtem Polygon ausgebildet. Das filterseitige Tankanschlusselement 32 in der Form einer konisch ausgebildeten, ebenfalls polygonförmigen Formdichtung 32 weist eine entsprechend komplementär geneigte Anschlussfläche auf. Hierdurch kann die Filterpatrone 31 geführt und fixiert durch die Rippen R und komplementären Schlitze S senkrecht an der Tankwand nach unten in das Innere des Tanks eingeführt und formschlüssig und dichtend durch die so ausgebildete Kodierstruktur mit dem Tankboden zur Filterung des im Tank befindlichen Wassers eingesetzt werden. Vorzugsweise kann auch bei dieser Ausführungsform, wie im Übrigen bei allen anderen Ausführungsformen auch, eine hier nicht dargestellte Bypassstruktur ausgebildet sein, um ein Verschneiden des gefilterten Wassers zu ermöglichen. Eine ergänzende rippenförmige Struktur R und eine komplementäre, schlitzförmige Kodierstruktur S ist hier durch die stirnseitige Ausnehmung S in der Filterwand und die komplementäre Form R der Auslassöffnung 35 im Bodenbereich der Tankwand ausgebildet. Auch diese können entsprechend abgeändert werden, z.B. in eine Vierkantform, eine Dreikantform oder andere sowie um weitere Ausnehmungen und/oder Vorsprünge aufweisende Struktur, zur Unterscheidung unterschiedlich zugelassener Filtertypen.

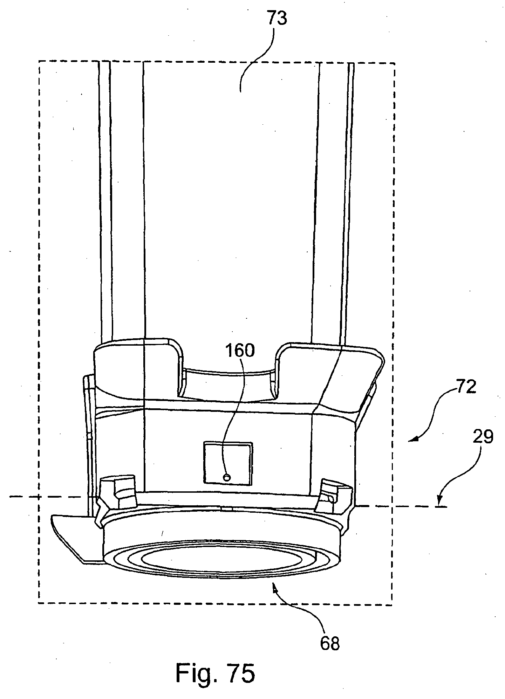

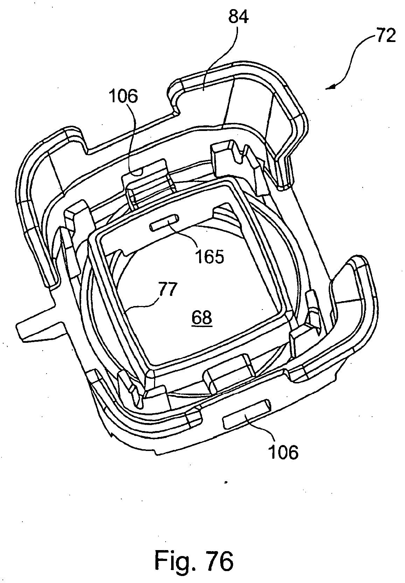

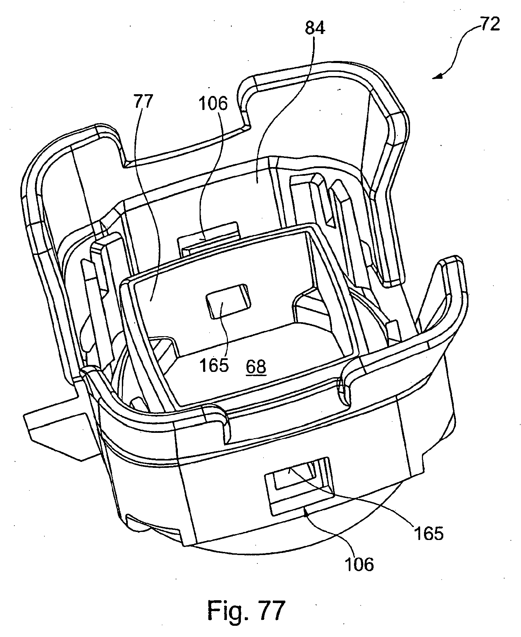

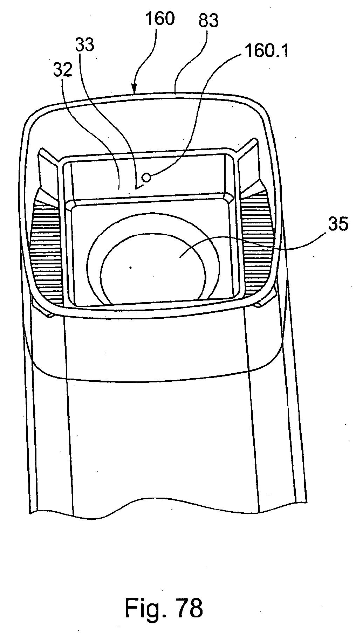

Eine weitere Ausführungsform einer Vierkant-Kodierung für einen Tank-Filter-Anschluss ist durch die Figuren 75 bis 78 dargestellt. Diese Ausführungsform weist zusätzlich zu den in den Figuren 20 bis 31 dargestellten Ausführungsformen eine Bypassstruktur auf. Diese Bypassstruktur umfasst in Anlehnung an die in den Figuren 32 bis 39 dargestellte Bypassstruktur in der stirnseitigen Gehäuseverlängerung der Filterpatrone 73 eine Öffnung in der Form einer Bohrung 160 auf, die in Überdeckung mit einer in einem tankseitigen Filtersockel-Anschlusselement 77 ausgebildeten Öffnung 165 den Durchfluss von im Tank befindlichen Rohwasser hin zum tankseitigen Geräteanschluss im Ablaufbereich des Tanks zur Beimischung zu dem durch die Filterpatrone gefilterten Wasser ermöglicht. Hierbei ist filterseitig die Bypassöffnung 160 in der stirnseitigen Verlängerung des Filters ausgebildet und realisiert eine Verschnittvorrichtung in Kombination mit dem tankseitigen Filteranschlusselement 77.

Eine weitere Möglichkeit zur Realisierung einer Verschnittvorrichtung könnte durch die Anordnung dieser Bypassöffnung 160 gegenüber einer in der Außenschale 84 ausgebildeten Öffnung 106 erreicht werden, wobei dann gegebenenfalls im Inneren der Filterpatrone und/oder im Inneren des tankseitigen Anschlusselementes eine entsprechende Kanalführung ausgebildet sein muss, um das so freigegebene Verschnittwasser dem durch die Filterpatrone aus deren Ausflussöffnung 35 ausfließenden, gefilterten Wassers beizumengen.

Eine weitere Verschnittstruktur kann durch die Ausbildung einer Bypassöffnung 160.1 im polygonförmigen, filterseitigen Tankanschlusselement 32, hier in der Form einer vierkantigen Formdichtung 32, realisiert werden, welche wiederum mit der im tankseitigen Filteranschluss 77 ausgebildeten Öffnung 165 korrespondiert. Die Größe der Öffnung 161.1 bestimmt hierbei wiederum die Verschnittmenge. In dieser Ausführungsform ist die Verschnittvorrichtung direkt im Dichtbereich des polygonförmig ausgebildeten Tank-Filter-Anschlusses realisiert.

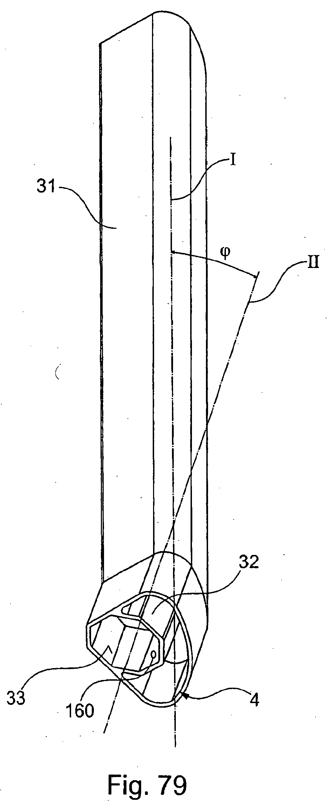

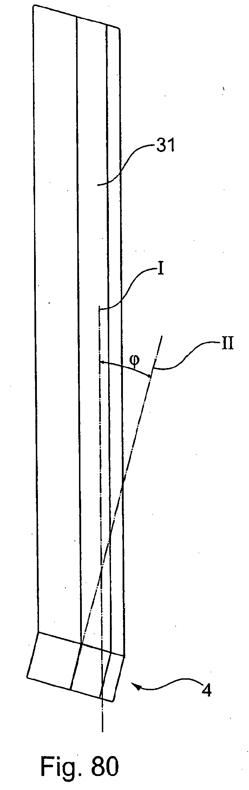

Die Figuren 79 und 80 zeigen eine Ausführungsform eines Tank-Filter-Anschlusses, bei dem eine durch das filterseitige Tankanschlusselement 4 verlaufende Längsachse II gegenüber einer durch das Gehäuse der Filterpatrone 31 verlaufenden Längsachse I schiefwinkelig ausgerichtet ist, hier vorzugsweise in einem spitzen Winkel ϕ. Diese schiefwinkelige oder auch gekröpfte oder auch abgeschrägte Ausrichtung des filterseitigen Tankanschlusselementes 4 gegenüber dem übrigen Filtergehäuse bildet eine weitere Form einer mechanischen Kodierung aus, die mit weiteren, bereits oben beschriebenen, Kodierungsformen kombinierbar ist, insbesondere mit einem hier dargestellten, polygonförmigen Anschlusselement in der Form eines Achtkantes. Dieser Achtkant kann bevorzugt ebenfalls als Formdichtung ausgebildet sein und, wie hier dargestellt, eine Bypass- bzw. Verschnittvorrichtung in der Form einer Öffnung 160 aufweisen, die bei Vorhandensein eines komplementären Elementes im tankseitigen Filteranschlusselement einen entsprechenden Verschnitt des zu filternden Wassers ermöglicht.

Die Figur 79 zeigt die Filterpatrone 31 in einer schrägen Ansicht von unten, bei der das filterseitige Anschlusselement 4 und dessen wesentliche Merkmale zu erkennen sind. Demgegenüber zeigt die Figur 80 eine Seitenansicht, bei der die Abwinkelung zwischen dem Patronengehäuse 31 und dem filterseitigen Tankanschluss 4 für einen beispielhaft dargestellten Winkel gezeigt ist.

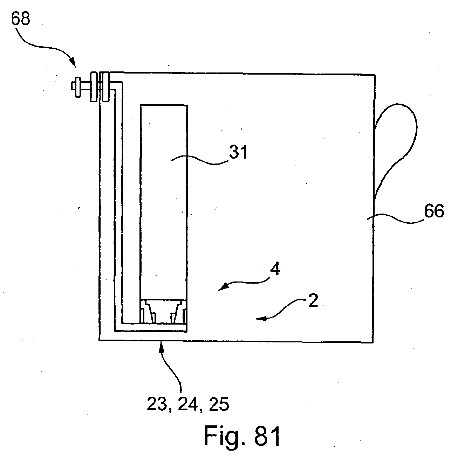

Die Figur 81 zeigt eine weitere nicht erfindungsgemäße Ausführungsform, bei der der Tank 66 wiederum als Einschubtank ausgebildet ist, in welchem eine Patrone 31 zur Filterung des darin enthaltenen Wassers an einem tankseitigem Filteranschlusselement 2 angeschlossen ist. Dieses tankseitige Anschlusselement 2 ist über eine Leitung, hier vorzugsweise in der Form eines stabilen Rohres, mit dem tankseitigen Geräteanschluss 68 verbunden. Dieser tankseitige Geräteanschluss 68 ist vom betriebsgemäßen bodenseitigen Bereich des Tankes 66 beabstandet vom Tankinneren nach außen geführt. In dieser Ausführungsform ist der Geräteanschluss 68 beispielhaft in einer in der Oberkante einer Tankwand eingelassenen Ausnehmung fixiert, die in vorteilhafter Weise als lösbare Verbindung ausgebildet sein kann, so dass ein einfaches Entnehmen und Reinigen ermöglicht wird.

Der Betrieb des Tankes ist durch einfaches Einschieben in eine entsprechend ausgebildete Aufnahme eines Gerätes möglich, bzw. dessen Befüllen mit frischem, anschließend durch den Filter 31 zu filterndes Wasser durch Herausziehen. Das tankseitige Filteranschlusselement 2 kann hierbei alle oben beschriebenen Kodierungs- und/oder Fixierung- und/oder Dichtungsmerkmale aufweisen, so dass auch in dieser Schubladen-Ausführungsform zuverlässig die Verwendung einer nicht betriebsgemäß vorgesehenen Filterpatrone ausgeschlossen werden kann, was im Übrigen auch für die Ausführung nach den Figuren 72 bis 74 gilt.

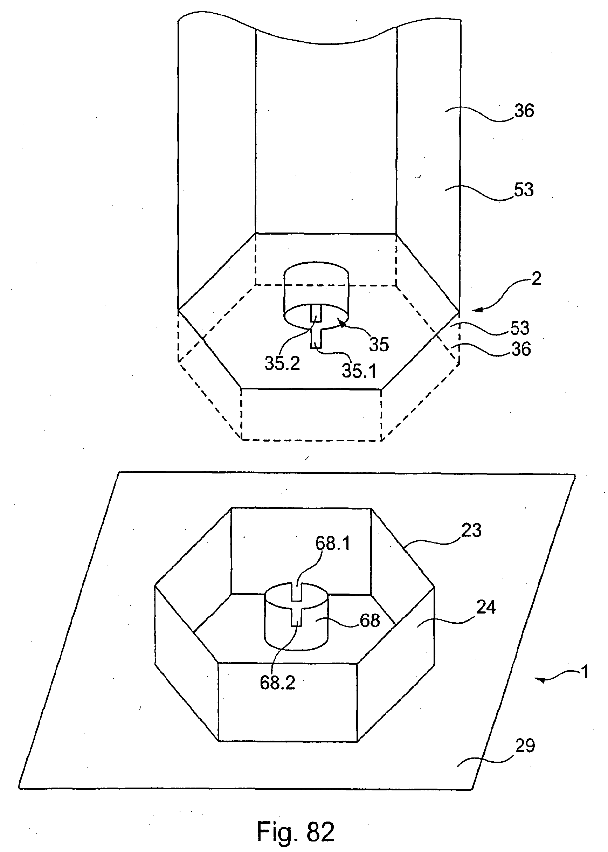

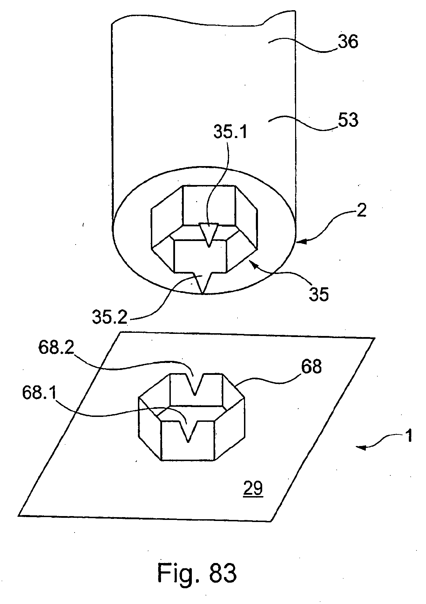

Zwei weitere mögliche nicht erfindungsgemäße Ausführungsformen von Kodierungen des Anschlusses zwischen Tank und Filter werden anhand der Figuren 82 und 83 dargestellt und beschrieben. Bei der Figur 82 weist das Gehäuse der Filterpatrone 53 selbst eine polygone Außenkontur in der Form eines Sechskantes auf, der in eine komplementäre, tankseitige polygone Kodier- und/oder Fixierstruktur 23 einsetzbar ist. Die fest durchgezogenen Linien zeigen die Filterpatrone 53 in einer Ansicht von schräg unten mit einem im Grunde ebenen Boden in dessen Mitte der Filterauslass 35 für das filtrierte Wasser beispielhaft als zylinderförmig vorstehendes Rohr mit zwei stirnseitigen axial vorstehenden Ansätzen 35.1 und 35.2 ausgebildet ist. Dieses zylindrisch vorstehende Auslasselement 35 ist durch die beiden axial vorstehenden Flügel kodiert und bildet mit seiner Stirnseite gegenüber der Stirnseite eines komplementären im tankseitige Filteranschluss ausgebildeten Auslass- und Aufnahmeelementes 68 mit seinen bei den Kodiernuten 68.1 und 68.2 eine axiale Kodier- und/oder Dichtstruktur bzw. - kontur. Die Filterpatrone 53 kann nur dann funktionstüchtig in das tankseitige Filteranschlusselement 1 eingesteckt werden, wenn die Stirnseite des Filterauslasses 35 dichtend mit der Stirnseite des tankseitigen Geräteauslasses 68 zusammenpasst.

Die hier beispielhaft dargestellte, sechskantige Außenkontur der Filterpatrone 53 kann in der mit den durchgezogenen Linien dargestellten Ausführungsform in den Anschlusssockel 23 des tankseitigen Filteranschlusselementes 1 fixierend und gegebenenfalls auch dichtend eingesteckt werden. Hierbei dient der Innenumfang des Anschlusssockels 23 zur Fixierung und gegebenenfalls zur Dichtung gegenüber dem Außenumfang bzw. gegenüber deren Anschluss.

Um eine weitere Befestigungsmöglichkeit zwischen der hier beispielhaft als Sechskant dargestellten, polygonförmigen Außenkontur der Filterpatrone 53 und einem entsprechend komplementären tankseitigen Anschlusssockel 1 aufzuzeigen ist das Gehäuse 36 der Filterpatrone 53 durch die gestrichelten Linien als gegenüber dem zuvor beschriebenen Filterboden verlängert dargestellt. Dieser polygonförmige, gegenüber dem Boden der Filterpatrone vorstehende Anschlussring kann zur Fixierung der Filterpatrone über den tankseitigen Filteranschlussstutzen 23, wiederum fixierend und vorzugsweise dichtend je nach Ausführung, soweit übergestülpt oder ebenfalls eingesteckt werden, bis die beiden Innenkodierungen, des Filterauslasses 35 und des Tankauslasses 68, dichtend aneinander anstehen bzw. deren hier beispielhaft gezeigten flügelartigen und komplementären schlitzartigen Kodierstrukturen dichtend aneinander anstehen bzw. ineinander greifen. Zur Wasserführung vom Tank ins Innere der Filterpatrone sind entsprechende Öffnungen und/oder Kanäle vorgesehen, die hier jedoch nicht gezeigt sind. Ebenfalls vorgesehen und nicht gezeigt können entsprechende Bypassstrukturen sein, wie sie bereits oben ausführlich beschrieben sind. Die Figur 82 zeigt somit sowohl eine Fixierung der Filterpatrone am Innenumfang des tankseitigen Filteranschlusselementes 23 als auch an dessen Außenumfang 24.

Die Figur 83 zeigt demgegenüber eine dahingehend abgewandelte nicht erfindungsgemäße Ausführungsform, dass das Gehäuse 36 der Filterpatrone beispielhaft rund dargestellt ist und der Filterauslass 35 als polygone Struktur, hier wiederum beispielhaft als Sechskant, der zusätzlich wieder eine stirnseitige Kodierung in der Form zweier axial vorstehender, kodierender, dreieckiger Spitzen oder Flügeln aufweist. Auch hier kann die Filterpatrone nur dann funktionstüchtig mit dem tankseitigen Filteranschlusselement 1 verbunden werden, wenn die beiden Auslassstrukturen 35 und 68 stirnseitig axial dichtend aneinander angefügt werden können. Von der Darstellung weiterer Kodierungs- und/oder Fixierungsstrukturen wurde aus Gründen der Übersichtlichkeit abgesehen. Es können jedoch alle bereits oben beschriebenen Strukturen auch hier entsprechend vorgesehen werden. Auch für die beiden Ausführungsformen entsprechend der Figuren 82 und 83 gilt, dass auch diese nicht erfindungsgemäßen Kodierungsstrukturen zwischen Filterseite und Tankseite vertauscht und/oder abgeändert und/oder durch weitere Konturen und/oder Strukturen ergänzt werden können.

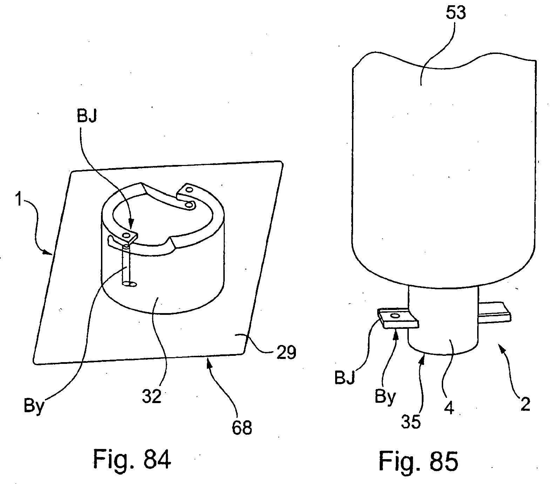

Zwei weitere nicht erfindungsgemäße Ausführungsmöglichkeiten bezüglich einer Bypasskonfiguration zwischen einem tankseitigen Filteranschlusselement 1 und einem filterseitigen Tankanschlusselement 2 sind in den Figuren 84 bis 87 dargestellt. Die Figuren 84 und 85 zeigen hier beispielhaft und schematisch eine Bypassanordnung BY, die einen Verschnitt zwischen durch die Filterpatrone 53 gefiltertem Wasser und einem nicht oder anderweitig gefiltertem oder aufbereitetem Wasser ermöglicht. Die Bypass- oder Verschnittstrecke BY ist in dieser Ausführungsform mit einem nicht erfindungsgemäßen Bajonettverschluss BJ derart kombiniert, dass in einem Bajonettflügel BJ eine Öffnung BY vorgesehen ist, die mit einer weiteren, an einem zum Bajonettflügel komplementären Bajonettschlitz BJ angeordneten weiteren Bypassöffnung BY derart korrespondiert, dass bei betriebsgemäß eingesetzter Filterpatrone eine entsprechende Bypassführung realisiert wird. In der hier dargestellten Ausführungsform ist die im tankseitigen Filteranschlusselement 1 gezeigte Bypassöffnung BY vom stirnseitigen Anschlussbereich des tankseitigen Anschlusssockels bis unterhalb der Stelle geführt, in welcher der filterseitige Tankanschlussstutzen 4 in betriebsgemäß eingesetzter Position endet, so dass das am Filterbett der Filterpatrone 53 vorbeigeführten Bypasswasser mit dem durch das Filterbett der Filterpatrone 53 filtrierten Wasser vermischt und dem tankseitigen Geräteanschluss 68 zugeführt wird.

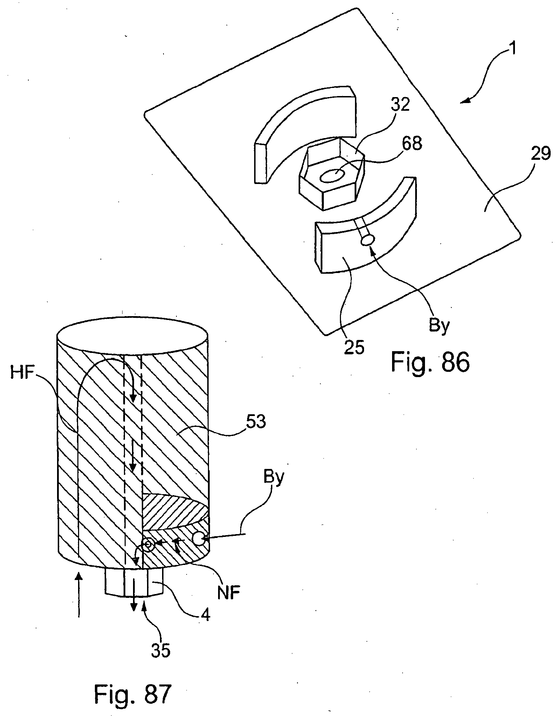

Die Figuren 86 und 87 zeigen eine demgegenüber abgewandelte nicht erfindungsgemäße Ausführungsform, dass die Bypassstrecke BY über eine von einem Hauptfilterbett HF der Filterpatrone 53 separate Aufbereitung- und/oder Filterstrecke geführt wird, die hier beispielhaft und symbolisch als Nebenfilterstrecke NF dargestellt ist. Diese zweite Aufbereitungs- und/oder Filterstrecke NF kann z.B. eine Aktivkohlefilterstrecke und/oder andere Aufbereitungsmechanismen und/oder -medien enthalten. Nach Durchfließen dieser Nebenfilterstrecke NF wird das über diese Bypassstrecke BY geführte Wasser mit dem durch die Filterstrecke HF der Filterpatrone 53 filtrierte Wasser vermischt, so dass es ebenfalls durch den tankseitigen Geräteanschluss 68 entnommen werden kann.

In der in Figur 87 gezeigten nicht erfindungsgemäßen Ausführungsform der Filterpatrone 53 ist die Zusammenführung der beiden separat über den Hauptfilter HF und über den Nebenfilter NF geführten bzw. aufbereiteten Wasserstrecken im Inneren der Filterpatrone 53 durch eine Einmündung in die innere Fallleitung der Filterpatrone 53 beispielhaft und schematisch dargestellt. In einer abgewandelten Ausführungsform kann durchaus aber ergänzend oder alternativ auch eine eigene Auslassöffnung aus der Filterpatrone heraus in Richtung zum tankseitigen Geräteanschluss 68 vorgesehen sein, wobei gegebenenfalls für alle drei Ausführungsformen gelten kann, dass sie alle innerhalb des tankseitigen Filteranschlussstutzens 32 münden, so dass, wiederum beispielhaft, eine Abdichtung durch einen Formschluss der beiden polygonförmigen Anschlusselemente des Tanks und des Filters möglich sind.

Die Einleitung des Bypassstroms in die Nebenfilterstrecke ist nur dann möglich, wenn die ebenfalls als Kodierung fungierende Öffnung BY an dem axial vom Tankboden 29 hoch stehenden Verschlüsselurngselement 25 mit der entsprechenden filterseitigen Bypassöffnung BY im betriebsgemäß vorgesehenen Zustand eingesteckt ist. Ist keine Überdeckung dieser beiden Öffnungen gegeben, so kann kein entsprechender Verschnitt realisiert werden. Der tankseitige Filteranschluss 1 entsprechend der Figur 86 ist ebenfalls nur schematisch und beispielhaft dargestellt und kann mit unterschiedlichsten Varianten der oben bereits beschriebenen Kodier- und Anschlussstruktur versehen sein, so dass gegebenenfalls nur eine einzige von allen sechs hier möglichen Winkelausrichtungen für einen zulässigen Filterabschluss freigeschaltet ist. Von der Darstellung solcher Kodierstrukturen wurde an dieser Stelle aus Gründen der Übersichtlichkeit abgesehen.

Grundsätzlich gilt auch für diese nicht erfindungsgemäßen Ausführungsformen in den Figuren 84 bis 87, dass auch sie mit allen oben beschriebenen Kodierungs- und/oder Fixierungs- und/oder Dichtstrukturen und/oder kombiniert werden können.

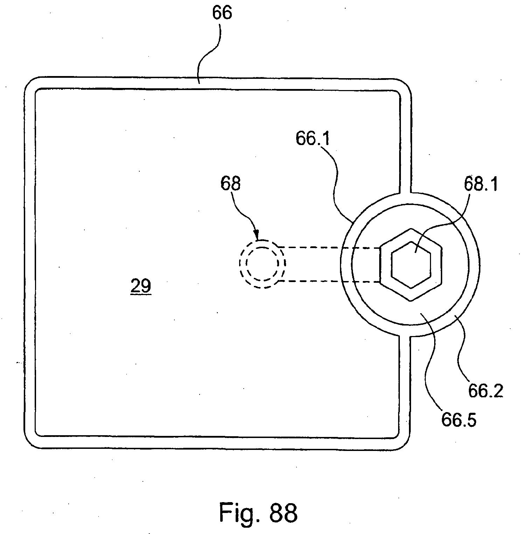

Die Figuren 88 bis 90 zeigen zwei weitere nicht erfindungsgemäße Ausführungsformen eines Tanks, bei denen die Filterpatrone außerhalb des Hauptgefäßes des Tanks 66 aber weiterhin, wie bisher beschrieben, zwischen dem tankseitigen Filteranschlusselement 1 und einem tankseitigem Geräteanschluss 68 angeordnet ist, um im Tank bevorratetes Rohwasser vor der Zufuhr an eine Entnahmestelle bzw. ein entsprechend angeschlossenes Gerät mit oder auch ohne Verschnitt zu filtern.

Die Figur 88 zeigt hierbei eine Draufsicht auf einen Tank 66, dessen Tankwand 66.1 zusammen mit einer weiteren Tankwand 66.2 ein Gehäuse 66.5 zur Aufnahme einer entsprechend geformten Filterpatrone 31 ausbildet und flüssigkeitsleitend mit dem Inneren des Tanks verbunden ist. Im Bodenbereich des Gehäuses 66.5 ist ein tankseitiges Filteranschlusselement 1 gezeigt, hier beispielhaft als kodierte Anschlussstruktur in der Form einer Polygonkontur. Im Inneren dieses tankseitigen Filteranschlusselementes 1 ist eine Abflussöffnung 68.1 zur Verbindung an das tankseitige Geräteanschlusselement 68 vorgesehen.

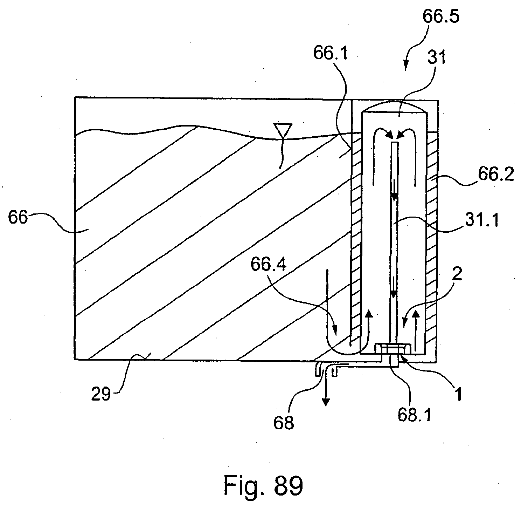

Die Figur 89 zeigt diesen Tank 66 in einer Schnittdarstellung quer durch das Filterpatronen-Aufnahmegehäuse 66.5 und die benachbarten Elemente des Tanks sowie die darunter ausgebildete Anschlussstruktur für das tankseitige Geräteanschlusselement 68. In dieser nicht erfindungsgemäßen Ausführungsform könnte der Tank beispielsweise als Stecktank in ein entsprechend geeignet aufgebautes Geräte eingebaut werden. Die Zufuhr des im Inneren des Tanks 66 eingefüllten Wassers an die Filterpatrone 31 erfolgt durch eine Öffnung 66.4 in der Tankwand 66.2, die beispielsweise in der Form einer nicht vollständig bis zum Tankboden 29 reichenden Tankwand 66.1 ausgebildet sein kann. Das zu filternde Rohwasser steht somit im Inneren des durch die beiden Tankwände 66.1 und 66.2 gebildeten Filteraufnahme-Gehäuses 66.5 gleich hoch wie im Inneren des Wassertanks 66. Zur Darstellung des Filterstroms durch die Filterpatrone hindurch sind aus dem Inneren des Tanks 66 und von der Bodenseite der Filterpatrone 31 aufsteigend bis zur Oberkante einer hier beispielhaft als zentrales Abflussrohr gezeigten Abflussleitung, durch diese hindurch und abschließend aus dem tankseitigen Geräteanschluss 68 herausführend Fließpfeile eingezeichnet. Alle bisher in der Beschreibung oben dargelegten Merkmale hinsichtlich einer Kodierung und/oder einer Fixierung und/oder einer Dichtung und/oder die Verwendung eines Adapterstückes und/oder dergleichen mehr sind auch hier in vollem Umfang möglich bzw. gültig.

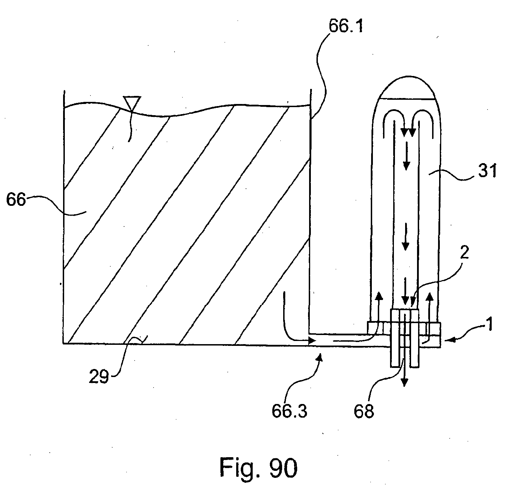

Die Figur 90 zeigt eine nicht erfindungsgemäße Ausführungsform, bei der die flüssigkeitsleitende Verbindung zwischen dem tankseitigen Filteranschlusselement 1 und dem filterseitigen Tankanschlusselement 2 vollkommen außerhalb des Tanks 66 erfolgt. Hierzu ist der Tankboden 29 beispielhaft an einer Stelle gegenüber einer Tankwand 66.1 nach außen vorgezogen weitergebildet und zu einer geschlossenen Flüssigkeitsleitung 66.3 geformt, durch welche das im Inneren des Tanks 66 befindliche Wasser zu dem in dieser beispielhaft dargestellten Ausführungsform außerhalb des Tanks 66 ausgebildeten tankseitigen Filteranschlusselement 1 fließt. An diesem tankseitigen Filteranschlusselement 1 ist die Filterpatrone 31 mit ihrem filterseitigen Tankanschlusselement 2 angeschlossen. Auch für diese nicht erfindungsgemäße Ausführungsform gilt, dass alle bereits oben beschriebenen Merkmale hinsichtlich einer Kodier- und/oder Dicht- und/oder Fixier- und/oder Adapterstruktur in jeglicher Ausführungsvariante vorgesehen werden können bzw. Gültigkeit haben.

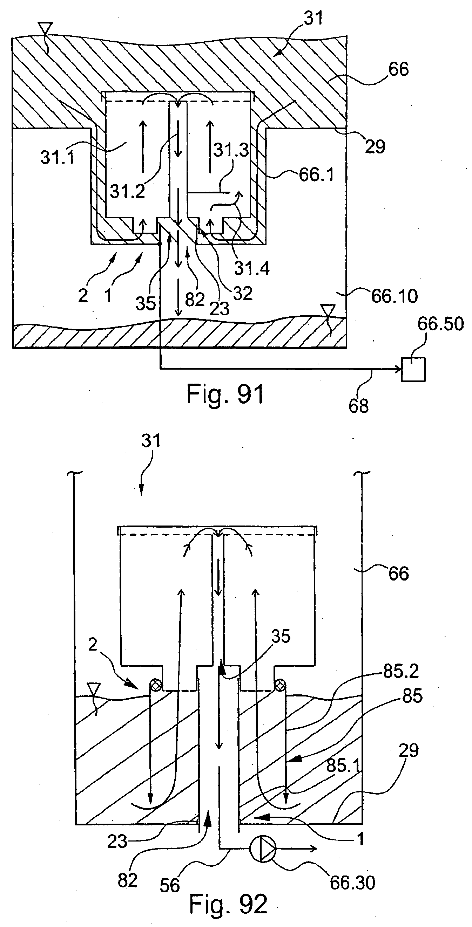

Weitere Ausführungsformen zur Verbindung eines tankseitigen Filteranschlusselementes mit einem filterseitigen Tankanschlusselement einer gravimetrisch betriebenen Filterpatrone sind in den Figuren 91 bis 93 dargestellt und werden hier nachfolgend beschrieben.

Die Figur 91 zeigt schematisch und beispielhaft einen Schnitt durch einen Wassertank 66 mit bodenseitig ausgebildeter Vertiefung 66.1 zur Aufnahme einer gravimetrisch betriebenen Filterpatrone 31. Durch diese im Grunde im Bodentank versenkte Anordnung der gravimetrisch betriebenen Filterpatrone 31 im Tank 66 kann der größte Teil des im Tank befindlichen Wasser gefiltert einem an den Tank über den Auslauf 82 angeschlossenen, hier beispielhaft dargestellten Sammel- oder Lagergefäß 66.10 und/oder nicht erfindungsgemäß einem symbolisch über den Geräteanschluss 68 angeschlossenen Gerät 66.50 zur Verfügung gestellt werden. Der dargestellte Schnitt verläuft sowohl durch das tankseitige Filteranschlusselement 1 als auch durch das filterseitige Tankanschlusselement 2, welches einer bereits oben beschriebenen, polygonförmig konturierten Anschlussstruktur entspricht. Auch in dieser Ausführungsform können Bypasselemente vorgesehen sein, wie sie bereits oben beschrieben sind, die hier jedoch aus Gründen der Übersichtlichkeit nicht dargestellt sind.

Der Durchfluss des im Tankinneren befindlichen Wassers kann in dieser beispielhaft dargestellten Ausführungsform außen am Gehäuse der Patrone vorbei bis in einen unteren Einlassbereich der Filterpatrone 31 in deren Inneres erfolgen. Die Einlassöffnungen in den Filter 31 sind durch gestrichelte Linien dargestellt. Nach passieren dieser Einlassöffnungen steigt das Wasser durch das ebenfalls nicht dargestellte Filterbett 31.1 im Aufstromverfahren auf und fließt nach Passieren einer geeigneten Rückhaltevorrichtung für das Filtrat in eine hier ebenfalls beispielhaft zentral dargestellte Abflussleitung, die ggf. mit einem im Abstromverfahren arbeitenden Filterbett 33.2 versehen sein kann. Ein im Querstromverfahren arbeitendes Filterbett 31.4 ist beispielhaft durch einen Quersteg 31.3 verursacht symbolisch dargestellt. Als Rückhaltevorrichtung für das Filtermedium ist hier wiederum beispielhaft eine gestrichelte Linie, z.B. zum symbolisieren eines Netzes, eines Siebes oder einer anderen entsprechenden Filtermedienrückhaltevorrichtung dargestellt.

Ein derartiger Tank 66 kann beispielsweise nicht erfindungsgemäß in einem wasserverbrauchenden und/oder - aufbereitenden Gerät 66.50 Anwendung finden, welches beispielsweise eine entsprechend zulaufende Menge an Wasser für eine bestimmte Anwendung dem Tank entnimmt. Mögliche Anwendungen wären z.B. kalt- und/oder heißbetreibbare Getränkeaufbereitungsmaschinen, wie Wasserspender, Teekocher, Kaffeeautomaten oder dergleichen mehr.

Die Figur 92 zeigt eine gegenüber der Figur 91 dahingehend abgewandelte nicht erfindungsgemäße Ausführungsform, dass zwar die gleiche Filterpatrone verwendet wird, der Tank aber keine entsprechende Vertiefung 66.1 aufweist. Die Anschlussstruktur des tankseitigen Filteranschlusselementes 1 und des filterseitigen Tankanachlusselementes 2 können der Ausführungsform in der Figur 91 entsprechen.

Bei einer abgewandelten Ausführungsform könnte beispielsweise der tankseitige Filteranschluss ebenfalls beispielsweise als sechskantiger Polygonzug ausgebildet sein und der filterseitige Tankanschluss 2 als vierkantige Polygonzug. Um diese beiden an sich nicht zusammenpassenden Kodierungsstrukturen dennoch zu einer betriebsgemäß funktionierenden Tank-Filter-Anschlussverbindung zusammenführen zu können, ist hier beispielhaft ein Adapter 85 zwischen tankseitigem Filteranschlusselement 1 und filterseitigem Anschlusselement 2 eingefügt dargestellt. Der Adapter 85 besteht aus einer den tankseitigen Filteranschlusssockel 1 mit der filterseitigen Tankanschlusselement 2 verbindender Leitung, hier zum Beispiel in der Form eines Innenrohres und einer vom Außenumfang des filterseitigen Tankanschlusselementes vorzugsweise bis möglichst nahe an den Tankboden 29 reichenden weiteren Leitung, hier in der Form eines Außenrohres 85.2, so dass der Ansaugpunkt für die Entnahme des filternden Wassers im Tank möglichst tief liegt. Bei diesem Tank kann es sich beispielsweise um einen sehr schmalen, jedoch hohen Wassertank 66 handeln, so dass wiederum nur eine möglichst geringe, nicht aus dem Tank durch den Filter zu entnehmende Todwassermenge im Tank verbleibt. Die geometrischen Abmessungen in dieser Darstellung sind nur beispielhaft, so dass zum Beispiel der Adapter 85 im Verhältnis deutlich kürzer ausgebildet sein kann, wodurch die Filterpatrone 31 dann auch entsprechend tiefer im Tank zu liegen kommt.

Zur Abdichtung zwischen dem äußeren Adapterrohr 85.2 und dem filterseitigen Tankanschlusselement 2 ist vorzugsweise eine Dichtung vorzusehen, die z.B. als Formdichtung oder aber auch, wie dargestellt, als O-Ring oder dergleichen mehr ausgebildet sein kann, um sicherzustellen, dass die Ansaugstelle für das Wasser im Bodenbereich des Tanks 66 erfolgt.

Bei dieser Ausführungsform kann gegebenenfalls zusätzlich zum gravimetrischen Betrieb als Unterstützung eine einen Unterdruck erzeugende Vorrichtung, z.B. eine Pumpe 66.30 angeschlossen werden. Diese kann wahlweise zugeschaltet oder abgeschaltet werden, oder aber auch für einen andernfalls gegebenenfalls nicht ausreichend großen Durchfluss an gefiltertem Wasser für einen bestimmten Anwendungsfall zugeschaltet werden.

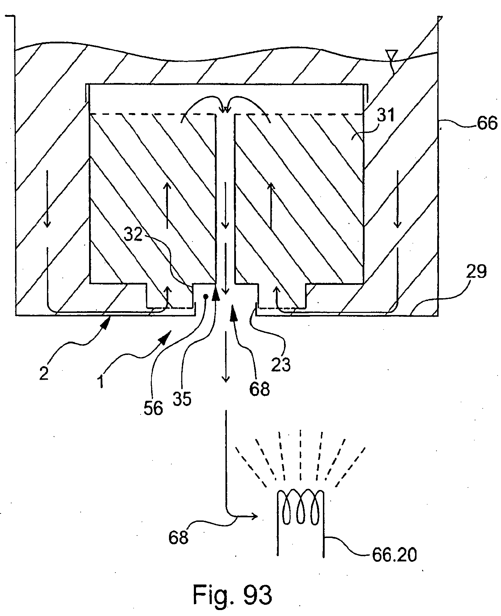

Die Figur 93 zeigt schließlich eine dritte Tank-Filter-Anschlussausführung mit beispielsweise gleichen Komponenten wie in der Figur 92, jedoch ohne zwischengeschaltetem Adapter 85. Der Aufbau und die Funktionsweise des tankseitigen Filteranschlusselementes 1 und des filterseitigen Tankanschlusselementes 2 kann ansonsten vollkommen gleich wie zur Figur 92 beschrieben ausgeführt sein.

Der Ausgang 35 der Filterpatrone kann, wie in der Figur 91 dargestellt, entweder direkt an ein Sammel- und/oder Lagergefäß 66.10 angeschlossen sein, oder entsprechend der ergänzenden symbolischen Darstellung nicht erfindungsgemäß an eine mit dem gefilterten Wasser zu versorgende Maschine. Entsprechend der Darstellung in der Figur 93 ist ein solcher nicht erfindungsgemäßer direkter Anschluss- mit einer Aufbereitungseinheit 66.20 in der Form einer Heizung oder eines Verdampfers dargestellt, wie er beispielsweise in einem Tee- und/oder Kaffeeautomat vorgesehen sein kann.

Zur grundsätzlichen Erläuterung wird im weiteren noch angeführt., dass der Auslass 35 an der Filterpatrone 31 für das gefilterte Wasser mit der aus dem Inneren des Tanks 66 zum tankseitigen Geräteanschluss 68 führenden, an der tankinneren Stirnseite des tankseitigen Anschlussstutzens 23 ausgebildeten Tankauslastöffnung 56. verbunden ist.

Die Filterpatrone wird somit vom in den Tank 66 eingefüllten Rohwasser vollkommen umspült, und zwar soweit, dass der tankseitige Filteranschlussstutzen 23, 54 und/oder der filterseitige Tankanschlussstutzen 32, 57 als Trennelement zwischen dem Auslass 35 für das gefilterte Wasser und dem von der Filterpatrone zu filternden Wasser ausgebildet ist. Dieser Tank-Filter-Anschluss stellt somit gleichzeitig die Trennstelle zwischen dem Rohwasser und dem gefilterten Wasser dar. In bevorzugten Ausführungsformen kann in diesem Bereich auch eine Verschnittvorrichtung für einen ggf. vorgesehenen Verschnitt des von der Filterpatrone gefilterten Wassers vorgesehen sein, in einer besonders bevorzugten Ausführungsform auch einstellbar.

Der Tank-Filter-Anschluss dient somit gleichzeitig zur Festsetzung und Fixierung als auch zur Abdichtung der Filterpatrone 31 am Tank 66.

Zur Abdichtung zwischen dem Filter 31 und dem Tank 66 kann eine Formschlussdichtung vorgesehen sein, die hier aus Gründen der Übersichtlichkeit jedoch nicht dargestellt ist.

Für alle Ausführungsformen entsprechend der Figuren 91 bis 93 gilt, dass sie ebenfalls mit allen oben bereits beschriebenen Kodierungs- und/oder Dichtungs- und/oder Fixierstrukturen kombiniert werden können, um den Einsatz einer nicht betriebsgemäß vorgesehenen Filterpatrone in einen entsprechend ausgerüsteten Tank zu verhindern.

### Bezugszeichenliste:

- 1: Anschlusssockel
- 2: Tankanschlusselement
- 3: Radialdichtung
- 4: Anschlussstutzen
- 5: Patronengehäuse
- 6: Seitenschlitz
- 7: Abflussrohr
- 8: Anschlusssockel
- 9: Tankanschlusselement
- 10: Anschlusstutzen
- 11: Patronengehäuse
- 12: Axialdichtung
- 13: Zwischenbereich
- 14: Abflussrohr
- 15: Aufnahme- und Führungsbahn
- 16: Vorsprung
- 17: Rastelement
- 18: Rastelement
- 19: Anschlusssockel
- 20: Öffnung
- 21: Kodiervorsprung
- 22: Kodierfeder
- 23: Anschlusssockel
- 24: Dichtfläche
- 25: Außenschale
- 26: Sperrelement
- 27: Bodenrippe
- 28: Bodenrippe
- 29: Tankboden
- 30: Innenrippe
- 31: Filterpatrone
- 32: Formdichtung
- 33: Dichtfläche
- 34: Eintrittsschlitz
- 35: Abflussöffnung
- 36: Filterpatronengehäuse
- 37: Schnappelement
- 38: Aufnahme
- 39: Unterkante
- 40: Anschlag
- 41: Bodenöffnung
- 42: Nuten
- 43: Schlüsselelement
- 44: Tankanschlussbereich
- 45: Böden
- 46: Axialdichtung
- 47: Trennlinie
- 48: Scheibe
- 49: Ringschulter
- 50: Ventilkörper
- 51: Feder
- 52: Tankboden
- 53: Filterpatrone
- 54: Anschlusssockel
- 55: Aussenfläche
- 56: Abflussleitung
- 57: Dichtung
- 58: Wand
- 59: Wand
- 60: Aussparung
- 61: Öffnung
- 62: Sockelwand
- 63: Sockelwand
- 64: Sockelwand
- 65: Bypassöffnung
- 66: Tank
- 67: Geräteanschluss
- 68: Geräteanschluss
- 69: Längsachse
- 70: Zwischenraum
- 71: Rand
- 72: Anschlusselement
- 73: Patrone
- 74: Fuss
- 75: Einlauföffnung
- 76: Einlauföffnung
- 77: Anschlusssockel
- 78: Bodenplatte
- 79: Dichtfläche
- 80: Dichtfläche
- 81: Formdichtung
- 82: Auslauf
- 83: Außenwand
- 84: Außenschale
- 85: Adapter
- 86: Adapter
- 87: Axialer Vorsprung
- 88: Axialer Vorsprung
- 89: Axialer Vorsprung
- 90: Axialer Vorsprung
- 91: Axialer Vorsprung
- 92: Axialer Vorsprung
- 93: Axialer Vorsprung
- 94: Axialer Vorsprung
- 95: Axialer Vorsprung
- 96: Axiale Ausnehmung
- 97: Axiale Ausnehmung
- 98: Axiale Ausnehmung
- 99: Axialer Vorsprung

## Patentansprüche

1. Wasserfilterkanne, umfassend einen Wassertank (66) mit gravimetrisch betriebener Filterpatrone (31), mit einem Anschluss am Wassertank zur Zufuhr von Wasser aus dem Wassertank in ein Sammel- und/oder Lagergefäß (66.10), wobei ein Filteranschluss zum Anschluss der Filterpatrone im Inneren des Wassertanks vorgesehen ist, **dadurch gekennzeichnet, dass** mechanische Kodierungsstrukturen am Filteranschluss des Wassertanks vorgesehen sind, um den Einsatz einer hierzu nicht korrespondierenden Filterpatrone auszuschließen, wobei die Kodierungsstruktur am äußeren Umfang eines tankseitigen Filteranschlusselementes vorgesehen ist, wobei ein tankseitiger Anschlusssockel (23) eine polygonförmige Außenkontur aufweist, dessen umfangseitige Außenfläche eine Dichtfläche (24) bildet, und die eingesetzte Filterpatrone (31) mit einer Formdichtung (32) versehen ist, die dementsprechend ebenfalls einen polygonförmigen Querschnitt aufweist, wobei die Innenfläche der Formdichtung (32) dabei die Dichtfläche (33) bildet.

2. Wasserfilterkanne nach Anspruch 1, **dadurch gekennzeichnet, dass** das tankseitige Filteranschlusselement eine äußere Umfangsform mit drehsymmetrischem Querschnitt aufweist.

3. Wasserfilterkanne nach einem der vorgenannten Ansprüche, **dadurch gekennzeichnet, dass** das tankseitige Filteranschlusselement eine Umfangsform (24) mit einer geradzahligen Polygonkontur aufweist.

4. Wasserfilterkanne nach einem der vorgenannten Ansprüche, **dadurch gekennzeichnet, dass** eine Verschnitteinstellung zum Verschneiden gefilterter Flüssigkeit mit ungefilterter und/oder anderweitig filtrierter oder aufbereiteter Flüssigkeit vorgesehen ist.

5. Wasserfilterkanne nach einem der vorangehenden Ansprüche, **dadurch gekennzeichnet, dass** ein Einlass (34) und ein Auslass (35) der Filterpatrone (31) in betriebsgemäßer Anordnung in einem unteren Bereich der Filterpatrone angeordnet sind.

6. Wasserfilterkanne nach einem der vorangehenden Ansprüche, **dadurch gekennzeichnet, dass** der Ausgang (35) der Filterpatrone direkt an ein Sammel- und/oder Lagergefäss (66.10) für das gefilterte Wasser angeschlossen ist.

7. Wasserfilterkanne nach einem der vorangehenden Ansprüche, **dadurch gekennzeichnet, dass** die Umfangsform des tankseitigen Filteranschlusselementes mit einer Sechskant-Querschnittskontur gegeben ist.

8. Wasserfilterkanne nach einem der vorangehenden Ansprüche 1 bis 6, **dadurch gekennzeichnet, dass** das polygonförmige Anschlusselement in der Form eines Achtkantes ausgebildet ist.

9. Wasserfilterkanne nach einem der vorangehenden Ansprüche 1 .bis 6, **dadurch gekennzeichnet, dass** der Tank-Filter-Anschluss als Vierkant-Kodierung realisiert ist.

## Claims

1. A water filter can, comprising a water tank (66) with gravimetrically operated filter cartridge (31), with a connection to the water tank for the supply of water from the water tank into a collection- and/or storage container (66.10), wherein a filter connection is provided for the connection of the filter cartridge in the interior of the water tank, **characterized in that** mechanical coding structures are provided at the filter connection of the water tank, in order to exclude the use of a filter cartridge not corresponding hereto, wherein the coding structure is provided at the external circumference of a filter connection element on the tank side, wherein a connector base (23) on the tank side has a polygonal outer contour, the outer surface on the circumference of which forms a sealing surface (24), and the inserted filter cartridge (31) is provided with a molded seal (32), which accordingly also has a polygonal cross section, wherein the inner surface of the molded seal (32) thereby forms the sealing surface (33).

2. A water filter can, according to Claim 1, **characterized in that**, the filter connection element on the tank side has an outer circumferential shape with rotationally symmetric cross section.

3. A water filter can, according to one of the aforementioned claims, **characterized in that** the filter connection element on the tank side has a circumferential shape (24) with an even polygon contour.

4. A water filter can, according to one of the aforementioned claims, **characterized in that** a bypass adjustment is provided for the diluting of filtered liquid with unfiltered and/or otherwise filtered or treated liquid.

5. A water filter can according to one of the preceding claims **characterized in that**, an inlet (34) and an outlet (35) of the filter cartridge (31) are arranged in an operational arrangement in a lower area of the filter cartridge.

6. A water filter can, according to one of the preceding claims, **characterized in that**, the outlet (35) of the filter cartridge is connected directly to a collection- and/or storage container (66.10) for the filtered water.

7. A water filter can, according to one of the preceding claims, **characterized in that**, the circumferential shape of the filter connection element on the tank side is given with a hexagonal cross section contour.

8. A water filter can, according to one of the preceding Claims 1 to 6, **characterized in that**, the polygonal connection element is designed in the form of an octagon.

9. A water filter can, according to one of the preceding claims 1 to 6, **characterized in that**, the tank-filter-connection is realized as a square coding.

## Revendications

1. Carafe filtrante comprenant un réservoir d'eau (66) avec une cartouche filtrante gravimétrique (31), avec un raccordement au réservoir d'eau pour l'introduction de l'eau provenant du réservoir d'eau dans un récipient de collecte et/ou de stockage (66.10), un raccord de filtre étant prévu pour le raccordement de la cartouche filtrante à l'intérieur du réservoir d'eau, **caractérisée en ce que** des structures de codage mécaniques sont prévues sur le raccord de filtre du réservoir d'eau, afin d'exclure l'insertion d'une cartouche filtrante non appropriée, la structure de codage se trouvant sur la périphérie extérieure d'un élément de raccord de filtre côté réservoir, un socle de raccordement côté réservoir (23) présentant un contour externe de forme polygonale dont surface externe côté périphérie forme une surface d'étanchéité (24) et la cartouche filtrante (31) insérée est munie d'un joint d'étanchéité moulé (32) qui présente également une section transversale de forme polygonale, la surface interne du joint d'étanchéité moulée (32) formant la surface d'étanchéité (33).

2. Carafe filtrante selon la revendication 1, **caractérisée en ce que** l'élément de raccordement de filtre côté réservoir présente une forme périphérique externe avec une section transversale présentant une symétrie de rotation.

3. Carafe filtrante selon l'une des revendications précédentes, **caractérisée en ce que** l'élément de raccordement de filtre côté réservoir présente une forme périphérique (24) avec un contour polygonal dont le nombre de côtés est pair.

4. Carafe filtrante selon l'une des revendications précédentes, **caractérisée en ce qu'**un by-pass pour le mélange du, liquide filtré avec un liquide non filtré et/ou filtré ou traité à un autre endroit.

5. Carafe filtrante selon l'une des revendications précédentes, **caractérisée en ce qu'**une entrée (34) et une sortie (35) de la cartouche filtrante (31) sont disposées, dans une disposition permettant le fonctionnement, dans une zone inférieure de la cartouche filtrante.

6. Carafe filtrante selon l'une des revendications précédentes, **caractérisée en ce que** la sortie (35) de la cartouche filtrante est raccordée directement à un récipient de collecte et/ou de stockage (66.10) pour l'eau filtrée.

7. Carafe filtrante selon l'une des revendications précédentes, **caractérisée en ce que** la forme périphérique de l'élément de raccordement de filtre côté réservoir présente un contour avec une section transversale hexagonale.

8. Carafe filtrante selon l'une des revendications 1 à 6, **caractérisée en ce que** l'élément de raccordement polygonal est conçu sous la forme d'un octogone.

9. Carafe filtrante selon l'une des revendications 1 à 6, **caractérisée en ce que** le raccord réservoir-filtre est réalisé sous la forme d'un codage carré.
